(19) Europäisches Patentamt / European Patent Office / Office européen des brevets

(11) **EP 4 716 327 A1**

(12) **EUROPEAN PATENT APPLICATION**
published in accordance with Art. 153(4) EPC

(43) Date of publication:
**25.03.2026 Bulletin 2026/13**

(21) Application number: **24806602.9**

(22) Date of filing: **15.05.2024**

(51) International Patent Classification (IPC):
**H04W 72/02** (2009.01)

(52) Cooperative Patent Classification (CPC):
**H04L 5/00; H04W 72/02; H04W 72/40**

(86) International application number:
**PCT/CN2024/093325**

(87) International publication number:
**WO 2024/235252 (21.11.2024 Gazette 2024/47)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.05.2023 CN 202310544284
11.08.2023 CN 202311012460**

(71) Applicant: **Datang Mobile Communications
Equipment Co., Ltd.
Beijing 100085 (CN)**

(72) Inventors:
• **LI, Hui**
  **Beijing 100085 (CN)**
• **REN, Xiaotao**
  **Beijing 100085 (CN)**
• **REN, Bin**
  **Beijing 100085 (CN)**
• **DA, Ren**
  **Beijing 100085 (CN)**

(74) Representative: **Ipsilon
12, avenue d'Italie
75013 Paris (FR)**

(54) **RESOURCE ALLOCATION METHOD, DEVICE AND APPARATUS FOR SIDELINK POSITIONING**

(57) Embodiments of the present disclosure provide a resource allocation method, a device and an apparatus, used for sidelink positioning. The method comprises: according to a mapping relationship between resources carrying physical sidelink control channels (PSCCHs) and sidelink positioning reference signal (SL PRS) resources, a first terminal determining a PSCCH resource and/or SL PRS resource to use.

Determine a PSCCH resource and/or an SL PRS resource to be used based on a mapping relationship between a resource carrying the PSCCH and the SL PRS resource

— 300

FIG. 3

**Description**

CROSS-REFERENCES TO RELATED APPLICATIONS

The present application claims priority to Chinese Patent Application No. 202310544284. X filed on May 15, 2023, entitled "Resource Allocation Method, Device and Apparatus for Sidelink Positioning", and Chinese Patent Application No. 202311012460.1 filed on August 11, 2023, entitled "Resource Allocation Method, Device and Apparatus for Sidelink Positioning", which are hereby incorporated by reference in their entireties.

FIELD

The present application relates to the field of radio communications, and in particular, to a resource allocation method and apparatus for sidelink positioning, and a device.

BACKGROUND

To support positioning in a sidelink (SL) system, a reference signal for positioning needs to be introduced, defined as a sidelink positioning reference signal (SL PRS).
In sidelink positioning, a terminal needs to determine SL PRS resources and sidelink control information (SCI) resources to be used from a resource pool for positioning. However, there is no corresponding allocation mechanism for SL-PRS resources and SCI resources for an existing sidelink system.

BRIEF SUMMARY

Embodiments of the present application provide a resource allocation method and apparatus for sidelink positioning, and a device to solve a problem of inability to allocate SL-PRS resources and SCI resources in sidelink positioning.
Embodiments of the present application provide a resource allocation method for sidelink positioning, performed by a first terminal, including:
determining a sidelink control information (SCI) resource and/or a sidelink positioning reference signal (SL PRS) resource to be used based on a mapping relationship between the SCI resource and the SL PRS resource.
In some embodiments, the mapping relationship between the SCI resource and the SL PRS resource includes one or more of:

a mapping relationship between an SCI resource numbering and an SL PRS resource numbering or an SL PRS resource set numbering;
a mapping relationship between an SCI resource numbering and a time-domain position of the SL PRS resource;
a mapping relationship between an SCI resource numbering and a frequency-domain position of the SL PRS resource;
a mapping relationship between an SCI resource numbering and a time-domain position and a frequency-domain position of the SL PRS resource;
a mapping relationship between an SCI resource numbering and a comb size of the SL PRS resource;
a mapping relationship between an SCI resource numbering and a resource unit offset of the SL PRS resource; or
a mapping relationship between an SCI resource numbering and a comb size and a resource unit offset of the SL PRS resource.

In some embodiments, the mapping relationship between the SCI resource numbering and the SL PRS resource numbering or the SL PRS resource set numbering includes:

a mapping relationship between each SCI resource numbering and at least one SL PRS resource numbering or at least one SL PRS resource set numbering; or
a mapping relationship between each SL PRS resource numbering or each SL PRS resource set numbering and at least one SCI resource numbering.

In some embodiments, the mapping relationship between the SCI resource numbering and the SL PRS resource numbering or the SL PRS resource set numbering satisfies following mapping formula:

$j = i \bmod N$, $i = 0, 1,..., M-1$; or

$i = j$ mod M, j = 0, 1,..., N-1;

where j is the SL PRS resource numbering or the SL PRS resource set numbering; i is the SCI resource numbering; N-1 is a maximum value of the SL PRS resource numbering or a maximum value of the SL PRS resource set numbering in a resource pool; and M-1 is a maximum SCI resource numbering in the resource pool.

In some embodiments, the mapping relationship between the SCI resource numbering and the SL PRS resource numbering or the SL PRS resource set numbering satisfies following mapping formula:

$j = i$ mod K-L, i = 0, 1,..., M-1; or
$i = ( j+L ) $ mod M, j = 0, 1,..., P-1;

where j is the SL PRS resource numbering or the SL PRS resource set numbering within a target slot; i is the SCI resource numbering; K is a total quantity of the SL PRS resources or SL PRS resource sets included in a resource pool; M-1 is a maximum SCI resource numbering in the resource pool; L is a total quantity of the SL PRS resources or SL PRS resource sets in the resource pool included in slots before the target slot; and P-1 is a maximum value of the SL PRS resource numbering or a maximum value of the SL PRS resource set numbering within the target slot.

In some embodiments, the mapping relationship between the SCI resource numbering and the time-domain position of the SL PRS resource includes:
a mapping relationship that SL PRS resources occupying a same time-domain position are mapped to a same SCI resource numbering.

In some embodiments, the mapping relationship between the SCI resource numbering and the frequency-domain position of the SL PRS resource includes:
a mapping relationship that SL PRS resources with a same starting frequency-domain position are mapped to a same SCI resource numbering.

In some embodiments, the mapping relationship between the SCI resource numbering and the time-domain position and the frequency-domain position of the SL PRS resource includes:
a mapping relationship that SL PRS resources with a same starting frequency-domain position and occupying a same time-domain position are mapped to a same SCI resource numbering.

In some embodiments, the mapping relationship between the SCI resource and the SL PRS resource is predefined or pre-configured.

In some embodiments, the mapping relationship between the SCI resource and the SL PRS resource is indicated by a higher-level signaling.

In some embodiments, the mapping relationship between the SCI resource numbering and the SL PRS resource numbering or the SL PRS resource set numbering includes:
a mapping relationship among the SCI resource numbering, the SL PRS resource numbering, and a slot numbering; or, a mapping relationship among the SCI resource numbering, the SL PRS resource set numbering, and a slot numbering.

In some embodiments, determining the SCI resource and/or the SL PRS resource to be used based on the mapping relationship between the SCI resource and the SL PRS resource includes:

receiving SCI transmitted from a second terminal; and
determining the SCI resource and/or the SL PRS resource to be used based on the SCI and the mapping relationship between the SCI resource and the SL PRS resource;
where a SCI resource used by the first terminal is different from a SCI resource used by the second terminal, and an SL PRS resource used by the first terminal is different from an SL PRS resource used by the second terminal.

In some embodiments, the higher-level signaling includes at least one of a long term evolution positioning protocol (LPP) signaling, a sidelink positioning protocol (SLPP) signaling, or a radio resource control (RRC) signaling.

In some embodiments, the SCI resource and the SL PRS resource determined to be used by the first terminal are in a same slot, or the SCI resource and the SL PRS resource determined to be used by the first terminal are in different slots.

Embodiments of the present application further provide a resource allocation method for sidelink positioning, performed by a first terminal, including:
determining a physical sidelink control channel (PSCCH) resource and/or a sidelink positioning reference signal (SL PRS) resource to be used based on a mapping relationship between a resource carrying the PSCCH and the SL PRS resource.

In some embodiments, the mapping relationship between the resource carrying the PSCCH and the SL PRS resource includes one or more of:

a mapping relationship between a numbering of the resource carrying the PSCCH and an SL PRS resource numbering or an SL PRS resource set numbering;

a mapping relationship between the resource carrying the PSCCH and a time-domain position of the SL PRS resource;

a mapping relationship between the resource carrying the PSCCH and a frequency-domain position of the SL PRS resource;

a mapping relationship between the resource carrying the PSCCH and a time-domain position and a frequency-domain position of the SL PRS resource;

a mapping relationship between the resource carrying the PSCCH and a comb size of the SL PRS resource;

a mapping relationship between the resource carrying the PSCCH and a resource unit offset of the SL PRS resource; or

a mapping relationship between the resource carrying the PSCCH and a comb size and a resource unit offset of the SL PRS resource.

In some embodiments, the mapping relationship between the numbering of the resource carrying the PSCCH and the SL PRS resource numbering or the SL PRS resource set numbering includes:

a mapping relationship between each numbering of the resource carrying the PSCCH and at least one SL PRS resource numbering or at least one SL PRS resource set numbering; or

a mapping relationship between each SL PRS resource numbering or each SL PRS resource set numbering and at least one numbering of the resource carrying the PSCCH.

In some embodiments, the mapping relationship between the numbering of the resource carrying the PSCCH and the SL PRS resource numbering or the SL PRS resource set numbering satisfies following mapping formula:

$j = i \bmod N$, $i = 0, 1,..., M-1$; or
$i = j \bmod M$, $j = 0, 1,..., N-1$;
where j is the SL PRS resource numbering or the SL PRS resource set numbering; i is the numbering of the resource carrying the PSCCH; N-1 is a maximum value of the SL PRS resource numbering or a maximum value of the SL PRS resource set numbering in a resource pool; and M-1 is a maximum value of the numbering of the resource carrying the PSCCH in the resource pool.

In some embodiments, the mapping relationship between the numbering of the resource carrying the PSCCH and the SL PRS resource numbering or the SL PRS resource set numbering satisfies following mapping formula:

$j = i \bmod K-L$, $i = 0, 1,..., M-1$; or
$i = ( j+L ) \bmod M$, $j = 0, 1,..., P-1$;
where j is the SL PRS resource numbering or the SL PRS resource set numbering within a target slot; i is the numbering of the resource carrying the PSCCH; K is a total quantity of the SL PRS resources or SL PRS resource sets included in a resource pool; M-1 is a maximum value of the numbering of the resource carrying the PSCCH in the resource pool; L is a total quantity of the SL PRS resources or SL PRS resource sets in the resource pool included in slots before the target slot; and P-1 is a maximum value of the SL PRS resource numbering or a maximum value of the SL PRS resource set numbering within the target slot.

In some embodiments, the mapping relationship between the resource carrying the PSCCH and the time-domain position of the SL PRS resource includes:
a mapping relationship that SL PRS resources occupying a same time-domain position are mapped to a same resource carrying the PSCCH.
In some embodiments, the mapping relationship between the resource carrying the PSCCH and the frequency-domain position of the SL PRS resource includes:
a mapping relationship that SL PRS resources with a same starting frequency-domain position are mapped to a same resource carrying the PSCCH.
In some embodiments, the mapping relationship between the resource carrying the PSCCH and the time-domain position and the frequency-domain position of the SL PRS resource includes:
a mapping relationship that SL PRS resources with a same starting frequency-domain position and occupying a same time-domain position are mapped to a same resource carrying the PSCCH.
In some embodiments, the mapping relationship between the resource carrying the PSCCH and the SL PRS resource is predefined or pre-configured.
In some embodiments, the mapping relationship between the resource carrying the PSCCH and the SL PRS resource is indicated by a higher-level signaling.

In some embodiments, the mapping relationship between the numbering of the resource carrying the PSCCH and the SL PRS resource numbering or the SL PRS resource set numbering includes:
a mapping relationship among the numbering of the resource carrying the PSCCH, the SL PRS resource numbering, and a slot numbering; or, a mapping relationship among the numbering of the resource carrying the PSCCH, the SL PRS resource set numbering, and a slot numbering.

In some embodiments, determining the PSCCH resource and/or the SL PRS resource to be used based on the mapping relationship between the resource carrying the PSCCH and the SL PRS resource includes:

receiving sidelink control information (SCI) transmitted from a second terminal; and
determining the PSCCH resource and/or the SL PRS resource to be used based on the SCI and the mapping relationship between the resource carrying the PSCCH and the SL PRS resource;
where a PSCCH resource used by the first terminal is different from a PSCCH resource used by the second terminal, and an SL PRS resource used by the first terminal is different from an SL PRS resource used by the second terminal.

In some embodiments, the higher-level signaling includes at least one of a long term evolution positioning protocol (LPP) signaling, a sidelink positioning protocol (SLPP) signaling, or a radio resource control (RRC) signaling.

In some embodiments, the PSCCH resource and the SL PRS resource determined to be used by the first terminal are in a same slot, or the PSCCH resource and the SL PRS resource determined to be used by the first terminal are in different slots.

Embodiments of the present application further provide a first terminal including a memory, a transceiver, and a processor, where
the memory is used for storing a computer program; the transceiver is used for transmitting and receiving data under control of the processor; and the processor is used for reading the computer program in the memory and performing the following operations:
determining a sidelink control information (SCI) resource and/or a sidelink positioning reference signal (SL PRS) resource to be used based on a mapping relationship between the SCI resource and the SL PRS resource.

In some embodiments, the mapping relationship between the SCI resource and the SL PRS resource includes one or more of:

a mapping relationship between an SCI resource numbering and an SL PRS resource numbering or an SL PRS resource set numbering;
a mapping relationship between an SCI resource numbering and a time-domain position of the SL PRS resource;
a mapping relationship between an SCI resource numbering and a frequency-domain position of the SL PRS resource;
a mapping relationship between an SCI resource numbering and a time-domain position and a frequency-domain position of the SL PRS resource;
a mapping relationship between an SCI resource numbering and a comb size of the SL PRS resource;
a mapping relationship between an SCI resource numbering and a resource unit offset of the SL PRS resource; or
a mapping relationship between an SCI resource numbering and a comb size and a resource unit offset of the SL PRS resource.

In some embodiments, the mapping relationship between the SCI resource numbering and the SL PRS resource numbering or the SL PRS resource set numbering includes:

a mapping relationship between each SCI resource numbering and at least one SL PRS resource numbering or at least one SL PRS resource set numbering; or
a mapping relationship between each SL PRS resource numbering or each SL PRS resource set numbering and at least one SCI resource numbering.

In some embodiments, the mapping relationship between the SCI resource numbering and the SL PRS resource numbering or the SL PRS resource set numbering satisfies following mapping formula:

$$j = i \bmod N, \, i = 0, 1,..., M\text{-}1;$$

or

$$i = j \bmod M, \, j = 0, 1,..., N\text{-}1;$$

where j is the SL PRS resource numbering or the SL PRS resource set numbering; i is the SCI resource numbering; N-1 is a maximum value of the SL PRS resource numbering or a maximum value of the SL PRS resource set numbering in a resource pool; and M-1 is a maximum SCI resource numbering in the resource pool.

In some embodiments, the mapping relationship between the SCI resource numbering and the SL PRS resource numbering or the SL PRS resource set numbering satisfies following mapping formula:

$$j = i \bmod K\text{-}L, \ i = 0, \ 1,..., \ M\text{-}1;$$

or

$$i = (\ j\text{+}L\ ) \bmod M, \ j = 0, \ 1,..., \ P\text{-}1;$$

where j is the SL PRS resource numbering or the SL PRS resource set numbering within a target slot; i is the SCI resource numbering; K is a total quantity of the SL PRS resources or SL PRS resource sets included in a resource pool; M-1 is a maximum SCI resource numbering in the resource pool; L is a total quantity of the SL PRS resources or SL PRS resource sets in the resource pool included in slots before the target slot; and P-1 is a maximum value of the SL PRS resource numbering or a maximum value of the SL PRS resource set numbering within the target slot.

In some embodiments, the mapping relationship between the SCI resource numbering and the time-domain position of the SL PRS resource includes:

a mapping relationship that SL PRS resources occupying a same time-domain position are mapped to a same SCI resource numbering.

In some embodiments, the mapping relationship between the SCI resource numbering and the frequency-domain position of the SL PRS resource includes:

a mapping relationship that SL PRS resources with a same starting frequency-domain position are mapped to a same SCI resource numbering.

In some embodiments, the mapping relationship between the SCI resource numbering and the time-domain position and the frequency-domain position of the SL PRS resource includes:

a mapping relationship that SL PRS resources with a same starting frequency-domain position and occupying a same time-domain position are mapped to a same SCI resource numbering.

In some embodiments, the mapping relationship between the SCI resource and the SL PRS resource is predefined or pre-configured.

In some embodiments, the mapping relationship between the SCI resource and the SL PRS resource is indicated by a higher-level signaling.

In some embodiments, the mapping relationship between the SCI resource numbering and the SL PRS resource numbering or the SL PRS resource set numbering includes:

a mapping relationship among the SCI resource numbering, the SL PRS resource numbering, and a slot numbering; or, a mapping relationship among the SCI resource numbering, the SL PRS resource set numbering, and a slot numbering.

In some embodiments, determining the SCI resource and/or the SL PRS resource to be used based on the mapping relationship between the SCI resource and the SL PRS resource includes:

receiving SCI transmitted from a second terminal; and
determining the SCI resource and/or the SL PRS resource to be used based on the SCI and the mapping relationship between the SCI resource and the SL PRS resource;
where a SCI resource used by the first terminal is different from a SCI resource used by the second terminal, and an SL PRS resource used by the first terminal is different from an SL PRS resource used by the second terminal.

In some embodiments, the higher-level signaling includes at least one of a long term evolution positioning protocol (LPP) signaling, a sidelink positioning protocol (SLPP) signaling, or a radio resource control (RRC) signaling.

In some embodiments, the SCI resource and the SL PRS resource determined to be used by the first terminal are in a same slot, or the SCI resource and the SL PRS resource determined to be used by the first terminal are in different slots.

Embodiments of the present application further provide a first terminal including a memory, a transceiver, and a processor, where

the memory is used for storing a computer program; the transceiver is used for transmitting and receiving data under control of the processor; and the processor is used for reading the computer program in the memory and performing the following operations:

determining a physical sidelink control channel (PSCCH) resource and/or a sidelink positioning reference signal (SL PRS) resource to be used based on a mapping relationship between a resource carrying the PSCCH and the SL PRS resource.

Embodiments of the present application further provide a resource allocation apparatus for sidelink positioning, including:
a first determining unit, used for determining a sidelink control information (SCI) resource and/or a sidelink positioning reference signal (SL PRS) resource to be used based on a mapping relationship between the SCI resource and the SL PRS resource.

In some embodiments, the mapping relationship between the SCI resource and the SL PRS resource includes one or more of:

a mapping relationship between an SCI resource numbering and an SL PRS resource numbering or an SL PRS resource set numbering;
a mapping relationship between an SCI resource numbering and a time-domain position of the SL PRS resource;
a mapping relationship between an SCI resource numbering and a frequency-domain position of the SL PRS resource;
a mapping relationship between an SCI resource numbering and a time-domain position and a frequency-domain position of the SL PRS resource;
a mapping relationship between an SCI resource numbering and a comb size of the SL PRS resource;
a mapping relationship between an SCI resource numbering and a resource unit offset of the SL PRS resource; or
a mapping relationship between an SCI resource numbering and a comb size and a resource unit offset of the SL PRS resource.

In some embodiments, the mapping relationship between the SCI resource numbering and the SL PRS resource numbering or the SL PRS resource set numbering includes:

a mapping relationship between each SCI resource numbering and at least one SL PRS resource numbering or at least one SL PRS resource set numbering; or
a mapping relationship between each SL PRS resource numbering or each SL PRS resource set numbering and at least one SCI resource numbering.

In some embodiments, the mapping relationship between the SCI resource numbering and the SL PRS resource numbering or the SL PRS resource set numbering satisfies following mapping formula:

$$j = i \bmod N, \ i = 0, \ 1,..., \ M\text{-}1;$$

or

$$i = j \bmod M, \ j = 0, \ 1,..., \ N\text{-}1;$$

where j is the SL PRS resource numbering or the SL PRS resource set numbering; i is the SCI resource numbering; N-1 is a maximum value of the SL PRS resource numbering or a maximum value of the SL PRS resource set numbering in a resource pool; and M-1 is a maximum SCI resource numbering in the resource pool.

In some embodiments, the mapping relationship between the SCI resource numbering and the SL PRS resource numbering or the SL PRS resource set numbering satisfies following mapping formula:

$$j = i \bmod K\text{-}L, \ i = 0, \ 1,..., \ M\text{-}1;$$

or

$$i = ( j+L ) \bmod M, \ j = 0, \ 1,..., \ P\text{-}1;$$

where j is the SL PRS resource numbering or the SL PRS resource set numbering within a target slot; i is the SCI resource numbering; K is a total quantity of the SL PRS resources or SL PRS resource sets included in a resource pool; M-1 is a maximum SCI resource numbering in the resource pool; L is a total quantity of the SL PRS resources or SL PRS resource sets in the resource pool included in slots before the target slot; and P-1 is a maximum value of the SL PRS resource numbering or a maximum value of the SL PRS resource set numbering within the target slot.

In some embodiments, the mapping relationship between the SCI resource numbering and the time-domain position of the SL PRS resource includes:

a mapping relationship that SL PRS resources occupying a same time-domain position are mapped to a same SCI resource numbering.

In some embodiments, the mapping relationship between the SCI resource numbering and the frequency-domain position of the SL PRS resource includes:

a mapping relationship that SL PRS resources with a same starting frequency-domain position are mapped to a same SCI resource numbering.

In some embodiments, the mapping relationship between the SCI resource numbering and the time-domain position and the frequency-domain position of the SL PRS resource includes:

a mapping relationship that SL PRS resources with a same starting frequency-domain position and occupying a same time-domain position are mapped to a same SCI resource numbering.

In some embodiments, the mapping relationship between the SCI resource and the SL PRS resource is predefined or pre-configured.

In some embodiments, the mapping relationship between the SCI resource and the SL PRS resource is indicated by a higher-level signaling.

In some embodiments, the mapping relationship between the SCI resource numbering and the SL PRS resource numbering or the SL PRS resource set numbering includes:

a mapping relationship among the SCI resource numbering, the SL PRS resource numbering, and a slot numbering; or, a mapping relationship among the SCI resource numbering, the SL PRS resource set numbering, and a slot numbering.

In some embodiments, determining the SCI resource and/or the SL PRS resource to be used based on the mapping relationship between the SCI resource and the SL PRS resource includes:

receiving SCI transmitted from a second terminal; and

determining the SCI resource and/or the SL PRS resource to be used based on the SCI and the mapping relationship between the SCI resource and the SL PRS resource;

where a SCI resource used by the first terminal is different from a SCI resource used by the second terminal, and an SL PRS resource used by the first terminal is different from an SL PRS resource used by the second terminal.

In some embodiments, the higher-level signaling includes at least one of a long term evolution positioning protocol (LPP) signaling, a sidelink positioning protocol (SLPP) signaling, or a radio resource control (RRC) signaling.

In some embodiments, the SCI resource and the SL PRS resource determined to be used by the first terminal are in a same slot, or the SCI resource and the SL PRS resource determined to be used by the first terminal are in different slots.

Embodiments of the present application further provide a resource allocation apparatus for sidelink positioning, including:

a second determining unit, used for determining a physical sidelink control channel (PSCCH) resource and/or a sidelink positioning reference signal (SL PRS) resource to be used based on a mapping relationship between a resource carrying the PSCCH and the SL PRS resource.

Embodiments of the present application further provide a computer-readable storage medium storing a computer program, where the computer program is used to cause a computer to perform the resource allocation method for sidelink positioning as described above.

Embodiments of the present application further provide a communication device, where the computer program is used to cause the communication device to perform the resource allocation method for sidelink positioning as described above.

Embodiments of the present application further provide a processor-readable storage medium storing a computer program, where the computer program is used to cause a processor to perform the resource allocation method for sidelink positioning as described above.

Embodiments of the present application further provide a chip product, where the chip product stores a computer program, where the computer program is used to cause the chip product to perform the resource allocation method for sidelink positioning as described above.

In the resource allocation method and apparatus for sidelink positioning, and the device provided in embodiments of the present application, the first terminal determines the SCI resource and/or the SL PRS resource to be used based on the mapping relationship between the SCI resource and the SL PRS resource, enabling the first terminal to determine the SL PRS resource and/or the SCI resource to be used for SL positioning, allocating SL PRS resource and/or the SCI resource, avoiding collisions and interference between resources, and improving positioning efficiency and accuracy.

BRIEF DESCRIPTION OF THE DRAWINGS

To illustrate solutions in the embodiments of the present application more clearly, the drawings need to be used in the descriptions of the embodiments are briefly described below. The drawings in the following description are some embodiments of the present application, and other drawings may be obtained based on these drawings without any creative work for those skilled in the art.

FIG. 1 is a first schematic flowchart of a resource allocation method for sidelink positioning according to an embodiment of the present application;

FIG. 2 is a schematic diagram of a sidelink positioning reference signal (SL PRS) resource multiplexing according to an embodiment of the present application;

FIG. 3 is a second schematic flowchart of a resource allocation method for sidelink positioning according to an embodiment of the present application;

FIG. 4 is a first schematic structural diagram of a first terminal according to an embodiment of the present application;

FIG. 5 is a second schematic structural diagram of a first terminal according to an embodiment of the present application;

FIG. 6 is a first schematic structural diagram of a resource allocation apparatus for sidelink positioning according to an embodiment of the present application; and

FIG. 7 is a second schematic structural diagram of a resource allocation apparatus for sidelink positioning according to an embodiment of the present application.

## DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that associated objects before and after are in an "or" relationship.

In the embodiments of the present application, the term "multiple" refers to two or more than two, and other quantifiers are similar.

A clear and complete description of the solutions in the embodiments of the present application is provided below in conjunction with the accompanying drawings. These embodiments are only a part of the embodiments of the present application, and not all of the embodiments. All other embodiments obtained by those skilled in the art based on the embodiments of the present application without any creative work belong to the scope of the present application.

In related sidelink systems, it is impossible to allocate sidelink positioning reference signal (SL PRS) resources and sidelink control information (SCI) resources. For example, in sidelink systems outside network coverage, without centralized network control, terminals are unable to determine SL PRS resources and SCI resource to be used from a resource pool for positioning, and unable to allocate SL-PRS resources and SCI resources reasonably or effectively. The resource allocation method and apparatus for sidelink positioning, and the device provided in the present application may effectively solve the above problems.

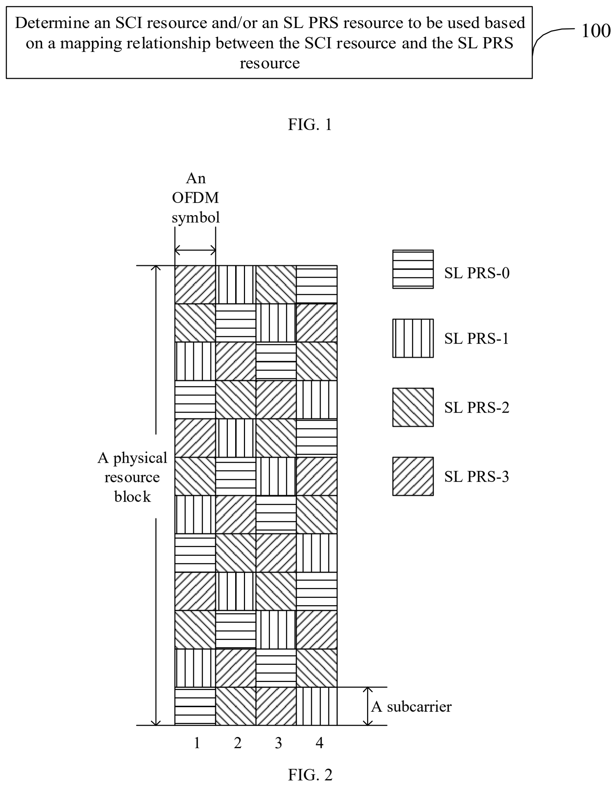

FIG. 1 is a first schematic flowchart of a resource allocation method for sidelink positioning according to an embodiment of the present application. As shown in FIG. 1, the method is performed by a first terminal and includes the following step:

step 100: determining an SCI resource and/or an SL PRS resource to be used based on a mapping relationship between the SCI resource and the SL PRS resource.

In an embodiment, in an SL positioning scenario, the first terminal may be a target terminal with positioning needs, or an anchor terminal that assists other terminals in positioning when other terminals have positioning needs.

In case that the SL PRS resource to be used is determined beforehand, the first terminal may determine the SCI resource to be used from a resource pool based on the mapping relationship between the SCI resource and the SL PRS resource; or, in case that the SCI resource to be used is determined beforehand, the first terminal may determine the SL PRS resource to be used from a resource pool based on the mapping relationship between the SCI resource and the SL PRS resource; or, the first terminal may directly determine the SCI resource and SL PRS resource to be used simultaneously from a resource pool based on the mapping relationship between the SCI resource and the SL PRS resource.

The resource pool in the present application may be a dedicated resource pool for each terminal in the SL system for SL positioning, or a shared resource pool for multiple terminals in the SL system for SL positioning, and the resource pool includes SCI resources and SL PRS resources.

In some embodiments, the resource pool may include multiple SCI resources and multiple SL PRS resources within one slot, or may include multiple SCI resources within one slot and multiple SL PRS resources within multiple slots, or may include multiple SCI resources within multiple slots and multiple SL PRS resources within one slot, or may include multiple SCI resources within multiple slots and multiple SL PRS resources within multiple slots.

Correspondingly, the mapping relationship between the SCI resource and the SL PRS resource may be a mapping relationship between multiple SCI resources and multiple SL PRS resources within one slot, or a mapping relationship between multiple SCI resources within one slot and multiple SL PRS resources within multiple slots, or a mapping relationship between multiple SCI resources within multiple slots and multiple SL PRS resources within one slot, or a mapping relationship between multiple SCI resources within multiple slots and multiple SL PRS resources within multiple slots.

Therefore, the SCI resource and SL PRS resource determined to be used by the first terminal may be in a same slot, or the SCI resource and SL PRS resource determined to be used by the first terminal may be in different slots.

In the resource allocation method for sidelink positioning provided in embodiments of the present application, the first terminal determines the SCI resource and/or the SL PRS resource to be used based on the mapping relationship between the SCI resource and the SL PRS resource, enabling the first terminal to determine the SL PRS resource and/or the SCI resource to be used for SL positioning, allocating SL PRS resource and/or the SCI resource, avoiding collisions and interference between resources, and improving positioning efficiency and accuracy.

In some embodiments, the mapping relationship between the SCI resource and the SL PRS resource may include one or more of the following.

(1) a mapping relationship between an SCI resource numbering and an SL PRS resource numbering or an SL PRS resource set numbering

In an embodiment, the mapping relationship between the SCI resource and the SL PRS resource may include the mapping relationship between the SCI resource numbering and the SL PRS resource numbering, or the mapping relationship between the SCI resource numbering and the SL PRS resource set numbering.

Based on the mapping relationship between the SCI resource numbering and the SL PRS resource numbering or the SL PRS resource set numbering, in case that the first terminal determines a certain SCI resource, the first terminal may also determine the SL PRS resource numbering or the SL PRS resource set numbering corresponding to the certain SCI resource numbering, to find the corresponding SL PRS resource; in case that the first terminal determines a certain SL PRS resource, the first terminal may also determine the SCI resource numbering corresponding to the SL PRS resource numbering or the SL PRS resource set numbering where the SL PRS resource is located, to find the corresponding SCI resource.

(2) a mapping relationship between an SCI resource numbering and a time-domain position of the SL PRS resource

In an embodiment, the mapping relationship between the SCI resource and the SL PRS resource may include the mapping relationship between the SCI resource numbering and the time-domain position of the SL PRS resource. For example, SL PRS resources with a same starting time-domain position are mapped to a same SCI resource numbering, or SL PRS resources with a same occupied time-domain position length (i.e., duration) are mapped to a same SCI resource numbering, etc.

The SL PRS resource may be one SL PRS resource or multiple SL PRS resources, or one SL PRS resource set or multiple SL PRS resource sets. Granularity of the time-domain position may be slots, sub-slots, orthogonal frequency division multiplexing (OFDM) symbols, etc., and the present application is not limited thereto.

In some embodiments, the mapping relationship between the SCI resource numbering and the time-domain position of the SL PRS resource includes:

a mapping relationship that SL PRS resources occupying a same time-domain position are mapped to a same SCI resource numbering.

In some embodiments, SL PRS resources occupying a same OFDM symbol are mapped to a same SCI resource numbering. For example, every two SL PRS resources are frequency division multiplexed on two OFDM symbols, meaning that every two SL PRS resources occupy the same time-domain position, as shown in Table 1. SL PRS-0 and SL PRS-1 occupy the same two OFDM symbols and may be mapped to SCI-0; SL PRS-2 and SL PRS-3 occupy the same two OFDM symbols and may be mapped to SCI-1... and so on.

Table 1 Resource Pool Structure Example 1

| Automatic Gain Control (AGC) | SCI-(M-1) | SL PRS-0/SL PRS-1 | SL PRS-2/SL PRS-3 | ... | SL PRS-(N-2)/-SL PRS-(N-1) | Guard Period (GP) |
| | ... | | | | | |
| | SCI-1 | | | | | |
| | SCI-0 | | | | | |

Based on the mapping relationship between the SCI resource numbering and the time-domain position of the SL PRS resource, in case that the first terminal determines a certain SCI resource, the first terminal may also determine the time-domain position of the SL PRS resource corresponding to the certain SCI resource numbering, to find the corresponding SL PRS resource; in case that the first terminal determines a certain SL PRS resource, the first terminal may also determine the SCI resource numbering based on the time-domain position of the SL PRS resource, to find the corresponding SCI resource.

(3) a mapping relationship between an SCI resource numbering and a frequency-domain position of the SL PRS resource

In an embodiment, the mapping relationship between the SCI resource and the SL PRS resource may include the mapping relationship between the SCI resource numbering and the frequency-domain position of the SL PRS resource. For example, SL PRS resources occupying a same frequency-domain position are mapped to a same SCI resource numbering, or SL PRS resources occupying a same frequency-domain position bandwidth are mapped to a same SCI resource numbering, etc.

The SL PRS resource may be one SL PRS resource or multiple SL PRS resources, or one SL PRS resource set or multiple SL PRS resource sets. Granularity of the frequency-domain position may be subcarriers, resource element (RE) groups, REs, etc., and the present application is not limited thereto.

In some embodiments, the mapping relationship between the SCI resource numbering and the frequency-domain position of the SL PRS resource includes:
a mapping relationship that SL PRS resources with a same starting frequency-domain position are mapped to a same SCI resource numbering.

In some embodiments, the mapping relationship with SCI resource numberings is determined based on the starting subcarrier position of the SL PRS resource. For example, all SL PRS resources with subcarrier 0 as the starting subcarrier are mapped to SCI resources numbered 0; all SL PRS resources with subcarrier 1 as the starting subcarrier are mapped to SCI resources numbered 1, and so on.

Based on the mapping relationship between the SCI resource numbering and the frequency-domain position of the SL PRS resource, in case that the first terminal determines a certain SCI resource, the first terminal may also determine the frequency-domain position of the SL PRS resource corresponding to the certain SCI resource numbering, to find the corresponding SL PRS resource; in case that the first terminal determines a certain SL PRS resource, the first terminal may also determine the SCI resource numbering based on the frequency-domain position of the SL PRS resource, to find the corresponding SCI resource.

(4) a mapping relationship between an SCI resource numbering and a time-domain position and a frequency-domain position of the SL PRS resource

In an embodiment, the mapping relationship between the SCI resource and the SL PRS resource may include the mapping relationship between the SCI resource numbering and the time-domain position and the frequency-domain position of the SL PRS resource. For example, SL PRS resources occupying a same time-domain position length and a same frequency-domain position bandwidth are mapped to a same SCI resource numbering.

The SL PRS resource may be one SL PRS resource or multiple SL PRS resources, or one SL PRS resource set or multiple SL PRS resource sets. Granularity of the time-domain position may be slots, sub-slots, OFDM symbols, etc; granularity of the frequency-domain position may be subcarriers, RE groups, REs, etc., and the present application is not limited thereto.

In some embodiments, the mapping relationship between the SCI resource numbering and the time-domain position and the frequency-domain position of the SL PRS resource includes:
a mapping relationship that SL PRS resources with a same starting frequency-domain position and occupying a same time-domain position are mapped to a same SCI resource numbering.

In some embodiments, the mapping relationship between the SL PRS resource and the SCI resource numbering is determined based on the OFDM symbol position occupied by the SL PRS resource and the starting subcarrier position. For example, all SL PRS resources occupying a first symbol position with a starting subcarrier as subcarrier 0 are mapped to SCI resources numbered 1, all SL PRS resources occupying the first symbol position with a starting subcarrier as subcarrier 1 are mapped to SCI resources numbered 2, all SL PRS resources occupying a second symbol position with a starting subcarrier as subcarrier 0 are mapped to SCI resources numbered 3, and all SL PRS resources occupying the second symbol position with a starting subcarrier as subcarrier 1 are mapped to SCI resources numbered 4.

Based on the mapping relationship between the SCI resource numbering and the time-domain position and the frequency-domain position of the SL PRS resource, in case that the first terminal determines a certain SCI resource, the first terminal may also determine the time-domain position and the frequency-domain position of the SL PRS resource corresponding to the SCI resource numbering, to find the corresponding SL PRS resource; in case that the first terminal determines a certain SL PRS resource, the first terminal may also determine the corresponding SCI resource numbering based on the time-domain position and the frequency-domain position of the SL PRS resource, to find the corresponding SCI resource.

(5) a mapping relationship between an SCI resource numbering and a comb size of the SL PRS resource set

In an embodiment, the mapping relationship between the SCI resource and the SL PRS resource may include the mapping relationship between the SCI resource numbering and the comb sizes of the SL PRS resource.

In case that multiple SL PRS resources occupy multiple identical OFDM symbols through frequency division multiplexing, the mapping relationship between the SCI resource numbering and the comb size of the SL PRS resource may be used to determine the SL PRS resource corresponding to the SCI resource or the SCI resource corresponding to the SL PRS resource.

For example, FIG. 2 is a schematic diagram of an SL PRS resource multiplexing according to an embodiment of the present application. As shown in FIG. 2, there are four SL PRS resources frequency division multiplexed, occupying the same four OFDM symbols (1, 2, 3, and 4 on the horizontal axis in FIG. 2 represent OFDM symbol 1, OFDM symbol 2, OFDM symbol 3, and OFDM symbol 4, respectively). The comb size of the four SL PRS resources is 4, and the grids of different patterns represent different SL PRS resources.

Assuming that the terminal determines that four SCI resources numbered 0-3 correspond to the SL PRS resource with a comb size of 4 based on the mapping relationship between the SCI resource numbering and the comb size of the SL PRS resource, in case of determining the SCI resource corresponding to the four SL PRS resources, the SCI resource numberings may be mapped to these four SL PRS resources in an order of RE offset. Assuming that the four SL PRS resources are SL PRS-0, SL PRS-1, SL PRS-2, SL PRS-3 in the order of RE offset, SL PRS-0 may be mapped to the SCI resource numberinged 0, SL PRS-1 may be mapped to the SCI resource numberinged 1, SL PRS-2 may be mapped to the SCI resource numberinged 2, and, SL PRS-3 may be mapped to the SCI resource numberinged 3.

Based on the mapping relationship between the SCI resource numbering and the comb size of the SL PRS resource, in case that the first terminal determines a certain SCI resource, the first terminal may also determine the comb size of the SL PRS resource corresponding to the certain SCI resource numbering, to find the corresponding SL PRS resource; in case that the first terminal determines a certain SL PRS resource, the first terminal may also determine the SCI resource numbering based on the comb size of the SL PRS resource, to find the corresponding SCI resource.

(6) a mapping relationship between an SCI resource numbering and a resource unit offset of the SL PRS resource

In an embodiment, the mapping relationship between the SCI resource and the SL PRS resource may include the mapping relationship between the SCI resource numbering and the resource unit offset of the SL PRS resource.

In case that multiple SL PRS resources occupy multiple identical OFDM symbols through frequency division multiplexing, the mapping relationship between the SCI resource numbering and the resource unit offset of the SL PRS resource may be used to determine the SL PRS resource corresponding to the SCI resource or the SCI resource corresponding to the SL PRS resource.

For example, as shown in FIG. 2, there are four SL PRS resources frequency division multiplexed, occupying the same four OFDM symbols (1, 2, 3, and 4 on the horizontal axis in FIG. 2 represent OFDM symbol 1, OFDM symbol 2, OFDM symbol 3, and OFDM symbol 4, respectively). The comb size of the four SL PRS resources is 4, the resource unit offsets of the four SL PRS are 0, 1, 2, and 3 respectively, and the grids of different patterns represent different SL PRS resources.

Assuming that the terminal determines that four SCI resources numbered 0-3 correspond to SL PRS resources with resource unit offsets of 0, 1, 2, and 3 based on the mapping relationship between the SCI resource numbering and the resource unit offset of the SL PRS resource, in case of determining the SCI resource corresponding to the four SL PRS resources, the SL PRS resource with RE offset 0 (SL PRS-0) may be mapped to the SCI resource numberinged 0, the SL PRS resource with RE offset 1 (SL PRS-1) may be mapped to the SCI resource numberinged 1, the SL PRS resource with RE offset 2 (SL PRS-2) may be mapped to the SCI resource numberinged 2, and the SL PRS resource with RE offset 3 may be mapped to the SCI resource numberinged 3.

Based on the mapping relationship between the SCI resource numbering and the resource unit offset of the SL PRS resource, in case that the first terminal determines a certain SCI resource, the first terminal may also determine the resource unit offset of the SL PRS resource corresponding to the certain SCI resource numbering, to find the corresponding SL PRS resource; in case that the first terminal determines a certain SL PRS resource, the first terminal may also determine the SCI resource numbering based on the resource unit offset of the SL PRS resource, to find the corresponding SCI resource.

(7) a mapping relationship between an SCI resource numbering and a comb size and a resource unit offset of the SL PRS resource

In an embodiment, the mapping relationship between the SCI resource and the SL PRS resource may include the mapping relationship between the SCI resource numbering and the comb size and the resource unit offset of the SL PRS resource.

In case that multiple SL PRS resources occupy multiple identical OFDM symbols through frequency division multiplexing, the mapping relationship between the SCI resource numbering and the comb size and the resource unit offset of the SL PRS resource may be used to determine the SL PRS resource corresponding to the SCI resource or the SCI resource corresponding to the SL PRS resource.

For example, as shown in FIG. 2, there are four SL PRS resources frequency division multiplexed, occupying the same four OFDM symbols (1, 2, 3, and 4 on the horizontal axis in FIG. 2 represent OFDM symbol 1, OFDM symbol 2, OFDM symbol 3, and OFDM symbol 4, respectively). The comb size of the four SL PRS resources is 4, the resource unit offsets of the four SL PRS are 0, 1, 2, and 3 respectively, and the grids of different patterns represent different SL PRS resources.

Assuming that the terminal determines that four SCI resources numbered 0-3 correspond to SL PRS resources with comb size of 4 and resource unit offsets of 0, 1, 2, and 3, based on the mapping relationship between the SCI resource numbering and the comb size and the resource unit offset of the SL PRS resource, in case of determining the SCI resource corresponding to the four SL PRS resources, the SL PRS resource with comb size of 4 and RE offset 0 (SL PRS-0) may be mapped to the SCI resource numberinged 0, the SL PRS resource with comb size of 4 and RE offset 1 (SL PRS-1) may be mapped to the SCI resource numberinged 1, the SL PRS resource with comb size of 4 and RE offset 2 (SL PRS-2) may be mapped to the SCI resource numberinged 2, and the SL PRS resource with comb size of 4 and RE offset 3 may be mapped to the SCI resource numberinged 3.

Based on the mapping relationship between the SCI resource numbering and the comb size and the resource unit offset of the SL PRS resource, in case that the first terminal determines a certain SCI resource, the first terminal may also determine the comb size and the resource unit offset of the SL PRS resource corresponding to the certain SCI resource numbering, to find the corresponding SL PRS resource; in case that the first terminal determines a certain SL PRS resource, the first terminal may also determine the SCI resource numbering based on the comb size and the resource unit offset of the SL PRS resource, to find the corresponding SCI resource.

In some embodiments, the mapping relationship between the SCI resource numbering and the SL PRS resource numbering or the SL PRS resource set numbering includes:

a mapping relationship between each SCI resource numbering and at least one SL PRS resource numbering or at least one SL PRS resource set numbering; or
a mapping relationship between each SL PRS resource numbering or each SL PRS resource set numbering and at least one SCI resource numbering.

In an embodiment, the mapping relationship between the SCI resource numbering and the SL PRS resource numbering or the SL PRS resource set numbering may be the mapping relationship between each SCI resource numbering and at least one SL PRS resource numbering or at least one SL PRS resource set numbering.

For example, SCI resources include SCI-0 to SCI-3, and SL PRS resources include SL PRS-0 to SL PRS-8. It may be that SL PRS-0 and SL PRS-1 are mapped to SCI-0, SL PRS-2 and SL PRS-3 mapped to SCI-1, SL PRS-4 and SL PRS-5 mapped to SCI-2, and SL PRS-6 and SL PRS-7 mapped to SCI-3.

The mapping relationship between the SCI resource numbering and the SL PRS resource numbering or the SL PRS resource set numbering may also be the mapping relationship between each SL PRS resource numbering or each SL PRS resource set numbering and at least one SCI resource numbering.

For example, SCI resources include SCI-0 to SCI-7, and SL PRS resources include SL PRS-0 to SL PRS-3. It may be that SCI-0 and SCI-1 are mapped to SL PRS-0, SCI-2 and SCI-3 mapped to SL PRS-1, SCI-4 and SCI-5 mapped to SL PRS-2, and SCI-6 and SCI-7 mapped to SL PRS-3.

In some embodiments, the mapping relationship between the SCI resource numbering and the SL PRS resource numbering or the SL PRS resource set numbering satisfies the following mapping formula:

$$j = i \bmod N, \ i = 0, \ 1, ..., \ M\text{-}1;$$

or

$$i = j \bmod M, \ j = 0, \ 1, ..., \ N\text{-}1;$$

where j is the SL PRS resource numbering or the SL PRS resource set numbering; i is the SCI resource numbering; N-1 is a maximum value of the SL PRS resource numbering or a maximum value of the SL PRS resource set numbering in a resource pool; and M-1 is a maximum SCI resource numbering in the resource pool.

In an embodiment, multiple SCI resources may be mapped to one SL PRS resource or SL PRS resource set through mapping formula j = i mod N, i = 0, 1,..., M-1,

where j is the SL PRS resource numbering or the SL PRS resource set numbering; i is the SCI resource numbering; N-1 is a maximum value of the SL PRS resource numbering or a maximum value of the SL PRS resource set numbering in a resource pool; and M-1 is a maximum SCI resource numbering in the resource pool.

For example, in case that the maximum SCI resource numbering in the resource pool is M-1 = 7, SCI resource numberings are SCI-0 to SCI-7, the maximum SL PRS resource numbering in the resource pool is N-1 = 4, and SL PRS resource numberings are SL PRS-0 to SL PRS-3, the mapping formula may be used to calculate and determine that: SCI-0 and SCI-4 are mapped to SL PRS-0, SCI-1 and SCI-5 mapped to SL PRS-1, SCI-2 and SCI-6 mapped to SL PRS-2, and SCI-3 and SCI-7 mapped to SL PRS-3.

Or, multiple SL PRS resources or SL PRS resource sets may be mapped to one SCI resource through mapping formula i = j mod M, j = 0, 1,..., N-1,

where j is the SL PRS resource numbering or the SL PRS resource set numbering; i is the SCI resource numbering; N-1 is a maximum value of the SL PRS resource numbering or a maximum value of the SL PRS resource set numbering in a resource pool; and M-1 is a maximum SCI resource numbering in the resource pool.

For example, in case that the maximum SCI resource numbering in the resource pool is M-1 = 3, SCI resource numberings are SCI-0 to SCI-3, the maximum SL PRS resource numbering in the resource pool is N-1 = 7, and SL PRS resource numberings are SL PRS-0 to SL PRS-7, the mapping formula may be used to calculate and determine that: SL PRS-0 and SL PRS-4 are mapped to SCI-0, SL PRS-1 and SL PRS-5 mapped to SCI-1, SL PRS-2 and SL PRS-6 mapped to SCI-2, and SL PRS-3 and SL PRS-7 mapped to SCI-3.

It should be noted that in case that SCI resources and/or SL PRS resources in the resource pool are in multiple slots, SCI resources and/or SL PRS resources in multiple slots may be consecutively numbered. The mapping relationship between the SCI resource and the SL PRS resource in the resource pool may be determined through the mapping formula.

In some embodiments, the mapping relationship between the SCI resource numbering and the SL PRS resource numbering or the SL PRS resource set numbering satisfies the following mapping formula:

$$j = i \bmod K\text{-}L, \; i = 0, \; 1,..., M\text{-}1;$$

or

$$i = (\,j\text{+}L\,) \bmod M, \; j = 0, \; 1,..., P\text{-}1;$$

where j is the SL PRS resource numbering or the SL PRS resource set numbering within a target slot; i is the SCI resource numbering; K is a total quantity of the SL PRS resources or SL PRS resource sets included in a resource pool; M-1 is a maximum SCI resource numbering in the resource pool; L is a total quantity of the SL PRS resources or SL PRS resource sets in the resource pool included in slots before the target slot; and P-1 is a maximum value of the SL PRS resource numbering or a maximum value of the SL PRS resource set numbering within the target slot.

In an embodiment, in case that SL PRS resources in the resource pool are in multiple slots, slot parameters may be introduced into the mapping relationship, and SL PRS resources in each slot may be numbered starting from 0.

Multiple SCI resources may be mapped to one SL PRS resource or SL PRS resource set through mapping formula j = i mod K-L, i = 0, 1,..., M-1,

where j is the SL PRS resource numbering or the SL PRS resource set numbering within a target slot; i is the SCI resource numbering; K is a total quantity of the SL PRS resources or SL PRS resource sets included in a resource pool; M-1 is a maximum SCI resource numbering in the resource pool; L is a total quantity of the SL PRS resources or SL PRS resource sets in the resource pool included in slots before the target slot.

For example, in case that the maximum SCI resource numbering in the resource pool is M-1 = 7, SCI resource numberings are SCI-0 to SCI-7, and the total quantity of the SL PRS resources or SL PRS resource sets included in the resource pool is K = 4, and the first slot and the second slot each includes 2 SL PRS resources: SL PRS-0 and SL PRS-1, the mapping formula may be used to calculate and determine that: SCI-0 and SCI-4 are mapped to SL PRS-0 of the first slot, SCI-1 and SCI-5 mapped to SL PRS-1 of the first slot, SCI-2 and SCI-6 mapped to SL PRS-0 in the second slot, and SCI-3 and SCI-7 mapped to SL PRS-1 in the second slot.

Or, multiple SL PRS resources or SL PRS resource sets may be mapped to one SCI resource through mapping formula i = ( j+L ) mod M, j = 0, 1,..., P-1,

where j is the SL PRS resource numbering or the SL PRS resource set numbering within a target slot; i is the SCI resource numbering; M-1 is a maximum SCI resource numbering in the resource pool; L is a total quantity of the SL PRS resources or SL PRS resource sets in the resource pool included in slots before the target slot; and P-1 is a maximum value of the SL PRS resource numbering or a maximum value of the SL PRS resource set numbering within the target slot.

For example, in case that the maximum SCI resource numbering in the resource pool is M-1 = 3, SCI resource numberings are SCI-0 to SCI-3, the total quantity of the SL PRS resources or SL PRS resource sets in the resource pool included in slots before the target slot is L = 10, the first slot and the second slot each includes 3 SL PRS resources: SL PRS-0, SL PRS-1, and SL PRS-2, and the third slot includes 4 SL PRS resources: SL PRS-0, SL PRS-1, SL PRS-2, and SL PRS-3, the mapping formula may be used to calculate and determine that: SL PRS-0 of the first slot, SL PRS-1 of the second slot, and SL-PRS-2 of the third slot are mapped to SCI-0, SL PRS-1 of the first slot, SL PRS-2 of the second slot, and SL-PRS-3 of the third slot mapped to SCI-1, SL PRS-2 of the first slot and the SL-PRS-0 of the third slot mapped to SCI-2, and the SL PRS-0 of the second slot and the SL-PRS-1 of the third slot mapped to SCI-3.

In some embodiments, the mapping relationship between the SCI resource and the SL PRS resource is predefined or pre-configured.

In an embodiment, the mapping relationship between the SCI resource and the SL PRS resource may be predefined in a protocol; it may also be pre-configured in the SL system, such as being pre-configured for each terminal by a network side device (such as a base station and a location management function (LMF)); it may also be pre-negotiated and configured between the first terminal and the network side device; it may also be negotiated and pre-configured among multiple terminals; it may also be determined and pre-configured by the first terminal itself.

In some embodiments, the mapping relationship between the SCI resource and the SL PRS resource is indicated by a higher-level signaling.

In an embodiment, the first terminal may receive a higher-level signaling indicating the mapping relationship between the SCI resource and the SL PRS resource. The first terminal may determine the mapping relationship between the SCI resource and the SL PRS resource indicated by the higher-level signaling.

In some embodiments, the higher-level signaling includes at least one of a long term evolution positioning protocol (LPP) signaling, a sidelink positioning protocol (SLPP) signaling, or a radio resource control (RRC) signaling.

For example, the mapping relationship between the SCI resource and the SL PRS resource is configured by the network side device (such as a base station and an LMF, etc.), and the network side device transmits the mapping relationship to the terminal through an LPP signaling or an RRC signaling; or, other terminals (such as server terminals) may configure the mapping relationship between the SCI resource and the SL PRS resource, and transmit the mapping relationship to the terminal through an SLPP signaling or an RRC signaling.

In some embodiments, the mapping relationship between the SCI resource and the SL PRS resource indicated by the higher-level signaling may be to configure, for each SL PRS resource or each SL PRS resource set, one or more SCI resource numberings associated with each SL PRS resource or each SL PRS resource set; or, to configure, for each SCI resource, one or more SL PRS resource numberings or the SL PRS resource set numberings associated with each SCI resource.

In some embodiments, the mapping relationship between the SCI resource numbering and the SL PRS resource numbering or the SL PRS resource set numbering includes:

a mapping relationship among the SCI resource numbering, the SL PRS resource numbering, and a slot numbering; or, a mapping relationship among the SCI resource numbering, the SL PRS resource set numbering, and a slot numbering.

In an embodiment, the mapping relationship between the SCI resource numbering and the SL PRS resource numbering indicated by the higher-level signaling may be to configure, for one SCI resource numbering, the SL PRS resource numbering associated with multiple slots; or to configure, for the SCI resource numbering in multiple slots, one associated SL PRS resource.

The mapping relationship between the SCI resource numbering and the SL PRS resource set numbering indicated by the higher-level signaling may be to configure, for one SCI resource numbering, the SL PRS resource numbering associated with multiple slots; or to configure, for the SCI resource numbering in multiple slots, one associated SL PRS resource.

In this case, a slot numbering may also be configured in higher-level signaling, that is, the mapping relationship among the SCI resource numbering, the SL PRS resource numbering, and the slot numbering, or the mapping relationship among the SCI resource numbering, the SL PRS resource set numbering, and the slot numbering, to support cross slot scheduling of the SL PRS resource, SL PRS resource set, or SCI resource in different slots.

For example, SCI-0 associated with a current slot and SCI-0 in a previous slot is configured for SL PRS-0; or, SL PRS-0 associated with a current slot and SL PRS-0 in a next slot is configured for SCI-0.

In some embodiments, determining the SCI resource and/or the SL PRS resource to be used based on the mapping relationship between the SCI resource and the SL PRS resource includes:

receiving SCI transmitted from a second terminal; and
determining the SCI resource and/or the SL PRS resource to be used based on the SCI and the mapping relationship between the SCI resource and the SL PRS resource;

where a SCI resource used by the first terminal is different from a SCI resource used by the second terminal, and an SL PRS resource used by the first terminal is different from an SL PRS resource used by the second terminal.

In an embodiment, the second terminal may be any terminal other than the first terminal. The second terminal may first select the SCI resource and the SL PRS resource based on the mapping relationship between the SCI resource and the SL PRS resource, and use the SCI resource to transmit SCI to the first terminal.

After receiving SCI, the first terminal may determine the SCI resource and the SL PRS resource used by the second terminal based on the SCI and the mapping relationship between the SCI resource and the SL PRS resource.

In some embodiments, the first terminal may determine the SCI resource and the SL PRS resource used by the second terminal based on the SCI resource numbering of the SCI resource used by the second terminal and the mapping relationship between the SCI resource and the SL PRS resource.

In some embodiments, the second terminal may indicate the SL PRS resource used by the second terminal in the SCI. The first terminal determines the SCI resource and the SL PRS resource used by the second terminal based on indication of the SCI.

After determining the SCI resource and the SL PRS resource used by the second terminal, the first terminal may select SCI resources different from the SCI resource used by the second terminal; or, select SL PRS resources different from the SL PRS resource used by the second terminal; or, select SCI resources different from the SCI resource used by the second terminal and SL PRS resources different from the SCI resource used by the second terminal.

In this way, the first terminal and the second terminal use different SCI resources and different SL PRS resources, avoiding collisions of the SL PRS resources between different terminals and reducing interference.

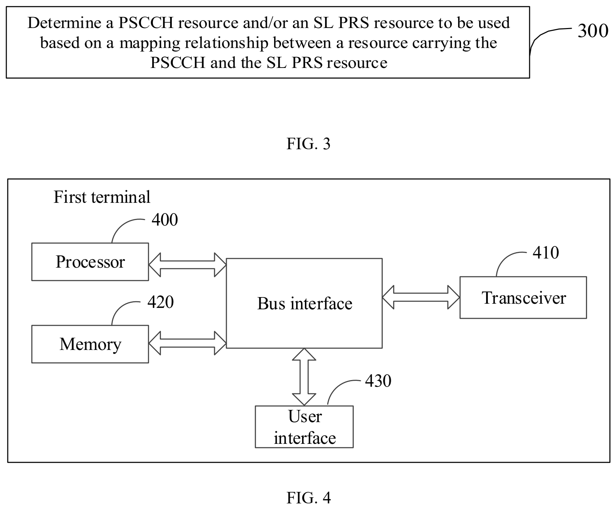

FIG. 3 is a second schematic flowchart of a resource allocation method for sidelink positioning according to an embodiment of the present application. As shown in FIG. 3, the method is performed by the first terminal and includes the following step:

step 300: determining a physical sidelink control channel (PSCCH) resource and/or an SL PRS resource to be used based on a mapping relationship between a resource carrying the PSCCH and the SL PRS resource.

In an embodiment, in an SL positioning scenario, the first terminal may be a target terminal with positioning needs, or an anchor terminal that assists other terminals in positioning when other terminals have positioning needs.

In case that the SL PRS resource to be used is determined beforehand, the first terminal may determine the PSCCH resource to be used from a resource pool based on the mapping relationship between the resource carrying the PSCCH and the SL PRS resource; or, in case that the PSCCH resource to be used is determined beforehand, the first terminal may determine the SL PRS resource to be used from a resource pool based on the mapping relationship between the resource carrying the PSCCH and the SL PRS resource; or, the first terminal may directly determine the PSCCH resource and SL PRS resource to be used simultaneously from a resource pool based on the mapping relationship between the resource carrying the PSCCH and the SL PRS resource.

The resource pool in the present application may be a dedicated resource pool for each terminal in the SL system for SL positioning, or a shared resource pool for multiple terminals in the SL system for SL positioning, and the resource pool includes PSCCH resources and SL PRS resources.

In some embodiments, the resource pool may include multiple PSCCH resources and multiple SL PRS resources within one slot, or may include multiple PSCCH resources within one slot and multiple SL PRS resources within multiple slots, or may include multiple PSCCH resources within multiple slots and multiple SL PRS resources within one slot, or may include multiple PSCCH resources within multiple slots and multiple SL PRS resources within multiple slots.

Correspondingly, the mapping relationship between the PSCCH resource (resource carrying the PSCCH) and the SL PRS resource may be a mapping relationship between multiple PSCCH resources and multiple SL PRS resources within one slot, or a mapping relationship between multiple PSCCH resources within one slot and multiple SL PRS resources within multiple slots, or a mapping relationship between multiple PSCCH resources within multiple slots and multiple SL PRS resources within one slot, or a mapping relationship between multiple PSCCH resources within multiple slots and multiple SL PRS resources within multiple slots.

Therefore, the PSCCH resource and SL PRS resource determined to be used by the first terminal may be in a same slot, or the PSCCH resource and SL PRS resource determined to be used by the first terminal may be in different slots.

In the resource allocation method for sidelink positioning provided in embodiments of the present application, the first terminal determines the PSCCH resource and/or the SL PRS resource to be used based on the mapping relationship between the resource carrying the PSCCH and the SL PRS resource, enabling the first terminal to determine the SL PRS resource and/or the PSCCH resource to be used for SL positioning, allocating SL PRS resource and/or the PSCCH resource, avoiding collisions and interference between resources, and improving positioning efficiency and accuracy.

In some embodiments, the mapping relationship between the resource carrying the PSCCH and the SL PRS resource may include one or more of the following.

(1) a mapping relationship between a numbering of the resource carrying the PSCCH and an SL PRS resource numbering or an SL PRS resource set numbering

In an embodiment, the mapping relationship between the PSCCH resource and the SL PRS resource may include the mapping relationship between the PSCCH resource numbering (the numbering of the resource carrying the PSCCH) and the SL PRS resource numbering, or the mapping relationship between the PSCCH resource numbering and the SL PRS resource set numbering.

Based on the mapping relationship between the PSCCH resource numbering and the SL PRS resource numbering or the SL PRS resource set numbering, in case that the first terminal determines a certain PSCCH resource, the first terminal may also determine the SL PRS resource numbering or the SL PRS resource set numbering corresponding to the certain PSCCH resource numbering, to find the corresponding SL PRS resource; in case that the first terminal determines a certain SL PRS resource, the first terminal may also determine the PSCCH resource numbering corresponding to the SL PRS resource numbering or the SL PRS resource set numbering where the SL PRS resource is located, to find the corresponding PSCCH resource.

(2) a mapping relationship between the resource carrying the PSCCH and a time-domain position of the SL PRS resource

In an embodiment, the mapping relationship between the PSCCH resource and the SL PRS resource may include the mapping relationship between the PSCCH resource and the time-domain position of the SL PRS resource. For example, SL PRS resources with a same starting time-domain position are mapped to a same PSCCH resource numbering, or SL PRS resources with a same occupied time-domain position length (i.e., duration) are mapped to a same PSCCH resource numbering, etc.

The SL PRS resource may be one SL PRS resource or multiple SL PRS resources, or one SL PRS resource set or multiple SL PRS resource sets. Granularity of the time-domain position may be slots, sub-slots, orthogonal frequency division multiplexing (OFDM) symbols, etc., and the present application is not limited thereto.

In some embodiments, the mapping relationship between the resource carrying the PSCCH and the time-domain position of the SL PRS resource includes:

a mapping relationship that SL PRS resources occupying a same time-domain position are mapped to a same resource carrying the PSCCH.

In some embodiments, SL PRS resources occupying a same OFDM symbol are mapped to a same PSCCH resource numbering. For example, every two SL PRS resources are frequency division multiplexed on two OFDM symbols, meaning that every two SL PRS resources occupy the same time-domain position, as shown in Table 2. SL PRS-0 and SL PRS-1 occupy the same two OFDM symbols and may be mapped to PSCCH-0; SL PRS-2 and SL PRS-3 occupy the same two OFDM symbols and may be mapped to PSCCH-1... and so on.

Table 2 Resource Pool Structure Example 2

| AGC | PSCCH-(M-1) | SL PRS-0/SL PRS-1 | SL PRS-2/SL PRS-3 | ... | SL PRS-(N-2)/SL PRS-(N-1) | GP |
| | ... | | | | | |
| | PSCCH-1 | | | | | |
| | PSCCH-0 | | | | | |

Based on the mapping relationship between the PSCCH resource and the time-domain position of the SL PRS resource, in case that the first terminal determines a certain PSCCH resource, the first terminal may also determine the time-domain position of the SL PRS resource corresponding to the PSCCH resource numbering, to find the corresponding SL PRS resource; in case that the first terminal determines a certain SL PRS resource, the first terminal may also determine the corresponding PSCCH resource based on the time-domain position of the SL PRS resource.

(3) a mapping relationship between the resource carrying the PSCCH and a frequency-domain position of the SL PRS resource

In an embodiment, the mapping relationship between the PSCCH resource and the SL PRS resource may include the mapping relationship between the PSCCH resource and the frequency-domain position of the SL PRS resource. For example, SL PRS resources occupying a same frequency-domain position are mapped to a same PSCCH resource, or SL PRS resources occupying a same frequency-domain position bandwidth are mapped to a same PSCCH resource, etc.

The SL PRS resource may be one SL PRS resource or multiple SL PRS resources, or one SL PRS resource set or multiple SL PRS resource sets. Granularity of the frequency-domain position may be subcarriers, resource element (RE) groups, REs, etc., and the present application is not limited thereto.

In some embodiments, the mapping relationship between the resource carrying the PSCCH and the frequency-domain position of the SL PRS resource includes:

a mapping relationship that SL PRS resources with a same starting frequency-domain position are mapped to a same resource carrying the PSCCH.

In some embodiments, the mapping relationship with PSCCH resource is determined based on the starting subcarrier position of the SL PRS resource. For example, all SL PRS resources with subcarrier 0 as the starting subcarrier are mapped to PSCCH resources numbered 0; all SL PRS resources with subcarrier 1 as the starting subcarrier are mapped to PSCCH resources numbered 1, and so on.

Based on the mapping relationship between the PSCCH resource and the frequency-domain position of the SL PRS resource, in case that the first terminal determines a certain PSCCH resource, the first terminal may also determine the frequency-domain position of the SL PRS resource corresponding to the certain PSCCH resource, to find the corresponding SL PRS resource; in case that the first terminal determines a certain SL PRS resource, the first terminal may also determine the corresponding PSCCH resource based on the frequency-domain position of the SL PRS resource.

(4) a mapping relationship between the resource carrying the PSCCH and a time-domain position and a frequency-domain position of the SL PRS resource

In an embodiment, the mapping relationship between the PSCCH resource and the SL PRS resource may include the mapping relationship between the PSCCH resource and the time-domain position and the frequency-domain position of the SL PRS resource. For example, SL PRS resources occupying a same time-domain position length and a same frequency-domain position bandwidth are mapped to a same PSCCH resource.

The SL PRS resource may be one SL PRS resource or multiple SL PRS resources, or one SL PRS resource set or multiple SL PRS resource sets. Granularity of the time-domain position may be slots, sub-slots, OFDM symbols, etc; granularity of the frequency-domain position may be subcarriers, RE groups, REs, etc., and the present application is not limited thereto.

In some embodiments, the mapping relationship between the resource carrying the PSCCH and the time-domain position and the frequency-domain position of the SL PRS resource includes:

a mapping relationship that SL PRS resources with a same starting frequency-domain position and occupying a same time-domain position are mapped to a same resource carrying the PSCCH.

In some embodiments, the mapping relationship between the SL PRS resource and the PSCCH resource is determined based on the OFDM symbol position occupied by the SL PRS resource and the starting subcarrier position. For example, all SL PRS resources occupying a first symbol position with a starting subcarrier as subcarrier 0 are mapped to PSCCH resources numbered 1, all SL PRS resources occupying the first symbol position with a starting subcarrier as subcarrier 1 are mapped to PSCCH resources numbered 2, all SL PRS resources occupying a second symbol position with a starting subcarrier as subcarrier 0 are mapped to PSCCH resources numbered 3, and all SL PRS resources occupying the second symbol position with a starting subcarrier as subcarrier 1 are mapped to PSCCH resources numbered 4.

Based on the mapping relationship between the PSCCH resource and the time-domain position and the frequency-domain position of the SL PRS resource, in case that the first terminal determines a certain PSCCH resource, the first terminal may also determine the time-domain position and the frequency-domain position of the SL PRS resource corresponding to the certain PSCCH resource, to find the corresponding SL PRS resource; in case that the first terminal determines a certain SL PRS resource, the first terminal may also determine the corresponding PSCCH resource based on the time-domain position and the frequency-domain position of the SL PRS resource.

(5) a mapping relationship between the resource carrying the PSCCH and a comb size of the SL PRS resource

In an embodiment, the mapping relationship between the PSCCH resource and the SL PRS resource may include the mapping relationship between the PSCCH resource and the comb size of the SL PRS resource.

In case that multiple SL PRS resources occupy multiple identical OFDM symbols through frequency division multiplexing, the mapping relationship between the PSCCH resource and the comb size of the SL PRS resource may be used to determine the SL PRS resource corresponding to the PSCCH resource or the PSCCH resource corresponding to the SL PRS resource.

For example, as shown in FIG. 2, there are four SL PRS resources frequency division multiplexed, occupying the same four OFDM symbols (1, 2, 3, and 4 on the horizontal axis in FIG. 2 represent OFDM symbol 1, OFDM symbol 2, OFDM symbol 3, and OFDM symbol 4, respectively). The comb size of the four SL PRS resources is 4, and the grids of different patterns represent different SL PRS resources.

Assuming that the terminal determines that four PSCCH resources numbered 0-3 correspond to the SL PRS resource with a comb size of 4 based on the mapping relationship between the PSCCH resource and the comb size of the SL PRS resource, in case of determining the PSCCH resource corresponding to the four SL PRS resources, the PSCCH resources may be mapped to these four SL PRS resources in an order of RE offset. Assuming that the four SL PRS resources are SL PRS-0, SL PRS-1, SL PRS-2, SL PRS-3 in the order of RE offset, SL PRS-0 may be mapped to the PSCCH resource numbering ed 0, SL PRS-1 may be mapped to the PSCCH resource numberinged 1, SL PRS-2 may be mapped to the PSCCH resource numberinged 2, and, SL PRS-3 may be mapped to the PSCCH resource numberinged 3.

Based on the mapping relationship between the PSCCH resource and the comb size of the SL PRS resource, in case that the first terminal determines a certain PSCCH resource, the first terminal may also determine the comb size of the SL PRS resource corresponding to the certain PSCCH resource, to find the corresponding SL PRS resource; in case that the first terminal determines a certain SL PRS resource, the first terminal may also determine the corresponding PSCCH resource based on the comb size of the SL PRS resource.

(6) a mapping relationship between the resource carrying the PSCCH and a resource unit offset of the SL PRS resource

In an embodiment, the mapping relationship between the PSCCH resource and the SL PRS resource may include the mapping relationship between the PSCCH resource and the resource unit offset of the SL PRS resource.

In case that multiple SL PRS resources occupy multiple identical OFDM symbols through frequency division multiplexing, the mapping relationship between the PSCCH resource and the resource unit offset of the SL PRS resource may be used to determine the SL PRS resource corresponding to the PSCCH resource or the PSCCH resource corresponding to the SL PRS resource.

For example, as shown in FIG. 2, there are four SL PRS resources frequency division multiplexed, occupying the same four OFDM symbols (1, 2, 3, and 4 on the horizontal axis in FIG. 2 represent OFDM symbol 1, OFDM symbol 2, OFDM symbol 3, and OFDM symbol 4, respectively). The comb size of the four SL PRS resources is 4, the resource unit offsets of the four SL PRS are 0, 1, 2, and 3 respectively, and the grids of different patterns represent different SL PRS resources.

Assuming that the terminal determines that four PSCCH resource numberinged 0-3 correspond to SL PRS resources with resource unit offsets of 0, 1, 2, and 3 based on the mapping relationship between the PSCCH resource and the resource unit offset of the SL PRS resource, in case of determining the PSCCH resource corresponding to the four SL PRS resources, the SL PRS resource with RE offset 0 (SL PRS-0) may be mapped to the PSCCH resource numberinged 0, the SL PRS resource with RE offset 1 (SL PRS-1) may be mapped to the PSCCH resource numberinged 1, the SL PRS resource with RE offset 2 (SL PRS-2) may be mapped to the PSCCH resource numberinged 2, and the SL PRS resource with RE offset 3 may be mapped to the PSCCH resource numberinged 3.

Based on the mapping relationship between the PSCCH resource and the resource unit offset of the SL PRS resource, in case that the first terminal determines a certain PSCCH resource, the first terminal may also determine the resource unit offset of the SL PRS resource corresponding to the certain PSCCH resource, to find the corresponding SL PRS resource; in case that the first terminal determines a certain SL PRS resource, the first terminal may also determine the corresponding PSCCH resource based on the resource unit offset of the SL PRS resource.

(7) a mapping relationship between the resource carrying the PSCCH and a comb size and a resource unit offset of the SL PRS resource

In an embodiment, the mapping relationship between the PSCCH resource and the SL PRS resource may include the mapping relationship between the PSCCH resource and the comb size and the resource unit offset of the SL PRS resource.

In case that multiple SL PRS resources occupy multiple identical OFDM symbols through frequency division multiplexing, the mapping relationship between the PSCCH resource and the comb size and the resource unit offset of the SL PRS resource may be used to determine the SL PRS resource corresponding to the PSCCH resource or the PSCCH resource corresponding to the SL PRS resource.

For example, as shown in FIG. 2, there are four SL PRS resources frequency division multiplexed, occupying the same four OFDM symbols (1, 2, 3, and 4 on the horizontal axis in FIG. 2 represent OFDM symbol 1, OFDM symbol 2, OFDM symbol 3, and OFDM symbol 4, respectively). The comb size of the four SL PRS resources is 4, the resource unit offsets of the four SL PRS are 0, 1, 2, and 3 respectively, and the grids of different patterns represent different SL PRS resources.

Assuming that the terminal determines that four PSCCH resources numbered 0-3 correspond to SL PRS resources with comb size of 4 and resource unit offsets of 0, 1, 2, and 3, based on the mapping relationship between the PSCCH resource and the comb size and the resource unit offset of the SL PRS resource, in case of determining the PSCCH resource corresponding to the four SL PRS resources, the SL PRS resource with comb size of 4 and RE offset 0 (SL PRS-0) may be mapped to the PSCCH resource numberinged 0, the SL PRS resource with comb size of 4 and RE offset 1 (SL PRS-1) may be mapped to the PSCCH resource numberinged 1, the SL PRS resource with comb size of 4 and RE offset 2 (SL PRS-2) may be mapped to the PSCCH resource numberinged 2, and the SL PRS resource with comb size of 4 and RE offset 3 may be mapped to the PSCCH resource numberinged 3.

Based on the mapping relationship between the PSCCH resource and the comb size and the resource unit offset of the SL PRS resource, in case that the first terminal determines a certain PSCCH resource, the first terminal may also determine the comb size and the resource unit offset of the SL PRS resource corresponding to the certain PSCCH resource, to find the corresponding SL PRS resource; in case that the first terminal determines a certain SL PRS resource, the first terminal may also determine the corresponding PSCCH resource based on the comb size and the resource unit offset of the SL PRS resource.

In some embodiments, the mapping relationship between the numbering of the resource carrying the PSCCH and the SL PRS resource numbering or the SL PRS resource set numbering includes:

a mapping relationship between each numbering of the resource carrying the PSCCH and at least one SL PRS resource numbering or at least one SL PRS resource set numbering; or
a mapping relationship between each SL PRS resource numbering or each SL PRS resource set numbering and at least one numbering of the resource carrying the PSCCH.

In an embodiment, the mapping relationship between the PSCCH resource numbering and the SL PRS resource numbering or the SL PRS resource set numbering may be the mapping relationship between each PSCCH resource numbering and at least one SL PRS resource numbering or at least one SL PRS resource set numbering.

For example, PSCCH resources include PSCCH-0 to PSCCH-3, and SL PRS resources include SL PRS-0 to SL PRS-8. It may be that SL PRS-0 and SL PRS-1 are mapped to PSCCH-0, SL PRS-2 and SL PRS-3 mapped to PSCCH-1, SL PRS-4 and SL PRS-5 mapped to PSCCH-2, and SL PRS-6 and SL PRS-7 mapped to PSCCH-3.

The mapping relationship between the PSCCH resource numbering and the SL PRS resource numbering or the SL PRS resource set numbering may also be the mapping relationship between each SL PRS resource numbering or each SL PRS resource set numbering and at least one PSCCH resource numbering.

For example, PSCCH resources include PSCCH-0 to PSCCH-7, and SL PRS resources include SL PRS-0 to SL PRS-3. It may be that PSCCH-0 and PSCCH-1 are mapped to SL PRS-0, PSCCH-2 and PSCCH-3 mapped to SL PRS-1, PSCCH-4 and PSCCH-5 mapped to SL PRS-2, and PSCCH-6 and PSCCH-7 mapped to SL PRS-3.

In some embodiments, the mapping relationship between the numbering of the resource carrying the PSCCH and the SL PRS resource numbering or the SL PRS resource set numbering satisfies the following mapping formula:

$$j = i \bmod N, \ i = 0, 1,..., M\text{-}1;$$

or

$$i = j \bmod M, \ j = 0, 1,..., N\text{-}1;$$

where j is the SL PRS resource numbering or the SL PRS resource set numbering; i is the numbering of the resource carrying the PSCCH; N-1 is a maximum value of the SL PRS resource numbering or a maximum value of the SL PRS resource set numbering in a resource pool; and M-1 is a maximum value of the numbering of the resource carrying the PSCCH in the resource pool.

In an embodiment, multiple PSCCH resources may be mapped to one SL PRS resource or SL PRS resource set through mapping formula $j = i \bmod N$, $i = 0, 1,..., M\text{-}1$,
where j is the SL PRS resource numbering or the SL PRS resource set numbering; i is the PSCCH resource numbering; N-1 is a maximum value of the SL PRS resource numbering or a maximum value of the SL PRS resource set numbering in a resource pool; and M-1 is a maximum PSCCH resource numbering in the resource pool.

For example, in case that the maximum PSCCH resource numbering in the resource pool is M-1 = 7, PSCCH resource numberings are PSCCH-0 to PSCCH-7, the maximum SL PRS resource numbering in the resource pool is N-1 = 4, and SL PRS resource numberings are SL PRS-0 to SL PRS-3, the mapping formula may be used to calculate and determine that: PSCCH-0 and PSCCH-4 are mapped to SL PRS-0, PSCCH-1 and PSCCH-5 mapped to SL PRS-1, PSCCH-2 and PSCCH-6 mapped to SL PRS-2, and PSCCH-3 and PSCCH-7 mapped to SL PRS-3.

Or, multiple SL PRS resources or SL PRS resource sets may be mapped to one PSCCH resource through mapping formula i = j mod M, j = 0, 1,..., N-1,

where j is the SL PRS resource numbering or the SL PRS resource set numbering; i is the PSCCH resource numbering; N-1 is a maximum value of the SL PRS resource numbering or a maximum value of the SL PRS resource set numbering in a resource pool; and M-1 is a maximum PSCCH resource numbering in the resource pool.

For example, in case that the maximum PSCCH resource numbering in the resource pool is M-1 = 3, PSCCH resource numberings are PSCCH-0 to PSCCH-3, the maximum SL PRS resource numbering in the resource pool is N-1 = 7, and SL PRS resource numberings are SL PRS-0 to SL PRS-7, the mapping formula may be used to calculate and determine that: SL PRS-0 and SL PRS-4 are mapped to PSCCH-0, SL PRS-1 and SL PRS-5 mapped to PSCCH-1, SL PRS-2 and SL PRS-6 mapped to PSCCH-2, and SL PRS-3 and SL PRS-7 mapped to PSCCH-3.

It should be noted that in case that PSCCH resources and/or SL PRS resources in the resource pool are in multiple slots, PSCCH resources and/or SL PRS resources in multiple slots may be consecutively numbered. The mapping relationship between the PSCCH resource and the SL PRS resource in the resource pool may be determined through the mapping formula.

In some embodiments, the mapping relationship between the numbering of the resource carrying the PSCCH and the SL PRS resource numbering or the SL PRS resource set numbering satisfies the following mapping formula:

$$j = i \bmod K\text{-}L, \ i = 0, \ 1,..., \ M\text{-}1;$$

or

$$i = (\ j\text{+}L\ ) \bmod M, \ j = 0, \ 1,..., \ P\text{-}1;$$

where j is the SL PRS resource numbering or the SL PRS resource set numbering within a target slot; i is the numbering of the resource carrying the PSCCH; K is a total quantity of the SL PRS resources or SL PRS resource sets included in a resource pool; M-1 is a maximum value of the numbering of the resource carrying the PSCCH in the resource pool; L is a total quantity of the SL PRS resources or SL PRS resource sets in the resource pool included in slots before the target slot; and P-1 is a maximum value of the SL PRS resource numbering or a maximum value of the SL PRS resource set numbering within the target slot.

In an embodiment, in case that SL PRS resources in the resource pool are in multiple slots, slot parameters may be introduced into the mapping relationship, and SL PRS resources in each slot may be numbered starting from 0.

Multiple PSCCH resources may be mapped to one SL PRS resource or SL PRS resource set through mapping formula j = i mod K-L, i = 0, 1,..., M-1,

where j is the SL PRS resource numbering or the SL PRS resource set numbering within a target slot; i is the PSCCH resource numbering; K is a total quantity of the SL PRS resources or SL PRS resource sets included in a resource pool; M-1 is a maximum PSCCH resource numbering in the resource pool; L is a total quantity of the SL PRS resources or SL PRS resource sets in the resource pool included in slots before the target slot.

For example, in case that the maximum PSCCH resource numbering in the resource pool is M-1 = 7, PSCCH resource numberings are PSCCH-0 to PSCCH-7, and the total quantity of the SL PRS resources or SL PRS resource sets included in the resource pool is K = 4, and the first slot and the second slot each includes 2 SL PRS resources: SL PRS-0 and SL PRS-1, the mapping formula may be used to calculate and determine that: PSCCH-0 and PSCCH-4 are mapped to SL PRS-0 of the first slot, PSCCH-1 and PSCCH-5 mapped to SL PRS-1 of the first slot, PSCCH-2 and PSCCH-6 mapped to SL PRS-0 in the second slot, and PSCCH-3 and PSCCH-7 mapped to SL PRS-1 in the second slot.

Or, multiple SL PRS resources or SL PRS resource sets may be mapped to one PSCCH resource through mapping formula i = ( j+L ) mod M, j = 0, 1,..., P-1,

where j is the SL PRS resource numbering or the SL PRS resource set numbering within a target slot; i is the PSCCH resource numbering; M-1 is a maximum PSCCH resource numbering in the resource pool; L is a total quantity of the SL PRS resources or SL PRS resource sets in the resource pool included in slots before the target slot; and P-1 is a maximum value of the SL PRS resource numbering or a maximum value of the SL PRS resource set numbering within the target slot.

For example, in case that the maximum PSCCH resource numbering in the resource pool is M-1 = 3, PSCCH resource numberings are PSCCH-0 to PSCCH-3, the total quantity of the SL PRS resources or SL PRS resource sets in the resource pool included in slots before the target slot is L = 10, the first slot and the second slot each includes 3 SL PRS resources: SL PRS-0, SL PRS-1, and SL PRS-2, and the third slot includes 4 SL PRS resources: SL PRS-0, SL PRS-1, SL PRS-2, and SL PRS-3, the mapping formula may be used to calculate and determine that: SL PRS-0 of the first slot, SL PRS-1 of the second slot, and SL-PRS-2 of the third slot are mapped to PSCCH-0, SL PRS-1 of the first slot, SL PRS-2 of the second slot, and SL-PRS-3 of the third slot mapped to PSCCH-1, SL PRS-2 of the first slot and the SL-PRS-0 of the third slot mapped to PSCCH-2, and the SL PRS-0 of the second slot and the SL-PRS-1 of the third slot mapped to PSCCH-3.

In some embodiments, the mapping relationship between the resource carrying the PSCCH and the SL PRS resource is predefined or pre-configured.

In an embodiment, the mapping relationship between the PSCCH resource and the SL PRS resource may be predefined in a protocol; it may also be pre-configured in the SL system, such as being pre-configured for each terminal by a network side device (such as a base station and an LMF); it may also be pre-negotiated and configured between the first terminal and the network side device; it may also be negotiated and pre-configured among multiple terminals; it may also be determined and pre-configured by the first terminal itself.

In some embodiments, the mapping relationship between the resource carrying the PSCCH and the SL PRS resource is indicated by a higher-level signaling.

In an embodiment, the first terminal may receive a higher-level signaling indicating the mapping relationship between the PSCCH resource and the SL PRS resource. The first terminal may determine the mapping relationship between the PSCCH resource and the SL PRS resource indicated by the higher-level signaling.

In some embodiments, the higher-level signaling includes at least one of a long term evolution positioning protocol (LPP) signaling, a sidelink positioning protocol (SLPP) signaling, or a radio resource control (RRC) signaling.

For example, the mapping relationship between the PSCCH resource and the SL PRS resource is configured by the network side device (such as a base station and an LMF, etc.), and the network side device transmits the mapping relationship to the terminal through an LPP signaling or an RRC signaling; or, other terminals (such as server terminals) may configure the mapping relationship between the PSCCH resource and the SL PRS resource, and transmit the mapping relationship to the terminal through an SLPP signaling or an RRC signaling.

In some embodiments, the mapping relationship between the PSCCH resource and the SL PRS resource indicated by the higher-level signaling may be to configure, for each SL PRS resource or each SL PRS resource set, one or more PSCCH resources associated with each SL PRS resource or each SL PRS resource set; or, to configure, for each PSCCH resource, one or more SL PRS resource numberings or the SL PRS resource set numberings associated with each PSCCH resource.

In some embodiments, the mapping relationship between the numbering of the resource carrying the PSCCH and the SL PRS resource numbering or the SL PRS resource set numbering includes:

a mapping relationship among the numbering of the resource carrying the PSCCH, the SL PRS resource numbering, and a slot numbering; or, a mapping relationship among the numbering of the resource carrying the PSCCH, the SL PRS resource set numbering, and a slot numbering.

In an embodiment, the mapping relationship between the PSCCH resource numbering and the SL PRS resource numbering indicated by the higher-level signaling may be to configure, for one PSCCH resource numbering, the SL PRS resource numbering associated with multiple slots; or to configure, for the PSCCH resource numbering in multiple slots, one associated SL PRS resource.

The mapping relationship between the PSCCH resource numbering and the SL PRS resource set numbering indicated by the higher-level signaling may be to configure, for one PSCCH resource numbering, the SL PRS resource numbering associated with multiple slots; or to configure, for the PSCCH resource numbering in multiple slots, one associated SL PRS resource.

In this case, a slot numbering may also be configured in higher-level signaling, that is, the mapping relationship among the PSCCH resource numbering, the SL PRS resource numbering, and the slot numbering, or the mapping relationship among the PSCCH resource numbering, the SL PRS resource set numbering, and the slot numbering, to support cross slot scheduling of the SL PRS resource, SL PRS resource set, or PSCCH resource in different slots.

For example, PSCCH-0 associated with a current slot and PSCCH-0 in a previous slot is configured for SL PRS-0; or, SL PRS-0 associated with a current slot and SL PRS-0 in a next slot is configured for PSCCH-0.

In some embodiments, determining the PSCCH resource and/or the SL PRS resource to be used based on the mapping relationship between the resource carrying the PSCCH and the SL PRS resource includes:

receiving SCI transmitted from a second terminal; and
determining the PSCCH resource and/or the SL PRS resource to be used based on the SCI and the mapping relationship between the PSCCH resource and the SL PRS resource;
where a PSCCH resource used by the first terminal is different from a PSCCH resource used by the second terminal, and an SL PRS resource used by the first terminal is different from an SL PRS resource used by the second terminal.

In an embodiment, the second terminal may be any terminal other than the first terminal. The second terminal may first select the PSCCH resource and the SL PRS resource based on the mapping relationship between the PSCCH resource and the SL PRS resource, and use the PSCCH resource to transmit SCI to the first terminal.

After receiving SCI, the first terminal may determine the PSCCH resource and the SL PRS resource used by the second terminal based on the SCI and the mapping relationship between the PSCCH resource and the SL PRS resource.

In some embodiments, the first terminal may determine the PSCCH resource and the SL PRS resource used by the second terminal based on the PSCCH resource numbering of the PSCCH resource used by the second terminal and the mapping relationship between the PSCCH resource and the SL PRS resource.

In some embodiments, the second terminal may indicate the SL PRS resource used by the second terminal in the SCI. The first terminal determines the PSCCH resource and the SL PRS resource used by the second terminal based on indication of the SCI.

After determining the PSCCH resource and the SL PRS resource used by the second terminal, the first terminal may select PSCCH resources different from the PSCCH resource used by the second terminal; or, select SL PRS resources different from the SL PRS resource used by the second terminal; or, select PSCCH resources different from the PSCCH resource used by the second terminal and SL PRS resources different from the SCI resource used by the second terminal.

In this way, the first terminal and the second terminal use different PSCCH resources and different SL PRS resources, avoiding collisions of the SL PRS resources between different terminals and reducing interference.

The following examples illustrate the methods provided in the above embodiments of the present application through specific application scenarios.

Embodiment I

The terminal is pre-configured with a dedicated resource pool for SL positioning, as shown in Table 3, which presents structures of the SCI resource and the SL PRS resource within one slot. This includes M SCI resources and N SL PRS resources.

Table 3: Resource Pool Structure Example 3

| AGC | SCI-(M-1) | SL PRS-0 | SL PRS-1 | ... | SL PRS-(N-1) | GP |
| | ... | | | | | |
| | SCI-1 | | | | | |
| | SCI-0 | | | | | |

The system predefines that the SL PRS resource numbering (j) and the SCI resource numbering (i) satisfy a mapping relationship. A predefined mapping relationship is:

$j = i \bmod N$, $i = 0, 1,..., M-1$.

Mod represents modulo operation. In this case, one SL PRS resource may correspond to multiple SCI resources. For example, M = 8, N = 4, SL PRS-0 may be mapped to SCI-0 and SCI-4.

In case that a target terminal performs round trip time (RTT) positioning, the target terminal selects SCI-0 and activates the resource transmission of SL PRS-0 based on the above mapping relationship, while determining an anchor terminal.

The anchor terminal determines to receive SL PRS-0 by sensing SCI-0 (successfully decoding SCI-0). At the same time, the anchor terminal selects SCI-1 (which may be any SCI other than SCI-0 and SCI-4) and activates the resource transmission of SL PRS-1 based on the above mapping relationship.

The anchor terminal determines an SL Rx Tx time difference based on the reception of SL PRS-0 and the transmission of SL PRS-1, and provides feedback to the target terminal. The target terminal determines to receive SL PRS-1 by sensing SCI-1. The target terminal determines the SL Rx Tx time difference based on the transmission of SL PRS-0 and the reception of SL PRS-1. At the same time, an RTT value is determined based on the SL Rx Tx time difference feedback from the anchor terminal, and the relative distance between the target terminal and the anchor terminal is obtained. Thereby relative positioning between the target terminal and the anchor terminal is achieved.

Another mapping relationship may be:

$$i = j \bmod M, \quad j = 0, 1,..., N-1.$$

In this case, one SCI resource may correspond to multiple SL PRS resources. For example, M = 4, N = 8, SCI-0 resource may be mapped to SL PRS-0 and SL PRS-4.

In case that the target terminal performs RTT positioning, the target terminal selects SCI-0, and selects to activate, based on the above mapping relationship, the resource transmission of SL PRS-0 between SL PRS-0 and SL PRS-4. This selection is indicated in SCI-0 and the anchor terminal is determined.

The anchor terminal determines to receive SL PRS-0 by sensing SCI-0. At the same time, the anchor terminal selects SCI-1, and selects to activate, based on the above mapping relationship, the resource transmission of SL PRS-1 between SL PRS-1 and SL PRS-5. This selection is indicated in SCI-1. The rest procedures are the same as before and will not be repeated.

Furthermore, the above provided is that SL PRS resource 0 to SL PRS resource N-1 are in the same slot. This scheme may also be used for that SL PRS resource 0 to SL PRS resource N-1 are in different slots.

The above avoids collisions of the SL PRS resources and reduces interference by using different SCI resources for the anchor terminal and the target terminal, and corresponding different SL PRS resources based on the mapping relationship.

Example II

The terminal is pre-configured with a dedicated resource pool for SL positioning, as shown in Table 4, which presents structures of the SCI resource and the SL PRS resource within two slot. One of the slots includes M SCI resources and N SL PRS resources (a first slot), while the other slot (a second slot) includes only L SL PRS resources.

Table 4 Resource Pool Structure Example 4

| AGC | SCI-(M-1) | SL PRS-0 | SL PRS-1 | ... | SL PRS-(N-1) | GP | AGC | SL PRS-0 | SL PRS-1 | ... | SL PRS-(L-1) | GP |
|-----|-----------|----------|----------|-----|--------------|----|----|----------|----------|-----|--------------|----|
|  | ... |  |  |  |  |  |  |  |  |  |  |  |
|  | SCI-1 |  |  |  |  |  |  |  |  |  |  |  |
|  | SCI-0 |  |  |  |  |  |  |  |  |  |  |  |

The system predefines that the SL PRS resource (j) and the SCI resource numbering (i) satisfy a mapping relationship. The numbering of SL PRS resources in multiple slots is K = N+L. Taking Table 4 as an example, a predefined mapping relationship is:

for the first slot, j = i mod K, i = 0, 1,..., M-1; and
for the second slot, j = i mod K-N, i = 0, 1,..., M-1.

Another implementation is:

for the first slot, i = j mod M, j = 0, 1,..., N-1; and
for the second slot, i = (j+N) mod M, j = 0, 1 ,..., L-1.

As shown in Table 5, a scenario with 3 slots is presented, where K = N+L+P. A predefined mapping relationship is:

for the first slot, j = i mod K, i = 0, 1,..., M-1;
for the second slot, j = i mod K-N, i = 0, 1,..., M-1; and
for the third slot, j = i mod K-(N+L), i = 0, 1,..., M-1.

Another implementation is:

for the first slot, i = j mod M, j = 0, 1,..., N-1;
for the second slot, i = (j+N) mod M, j = 0, 1,..., L-1; and
for the third slot, i = (j+N+L) mod M, j = 0, 1,..., P-1.

Table 5 Resource Pool Structure Example 5

| AGC | SCI-(M-1) | SL PRS-0 | SL PRS-1 | ... | SL PRS-(N-1) | GP | AGC | SL PRS-0 | SL PRS-1 | ... | SL PRS-(L-1) | GP | AGC | SL PRS-0 | SL PRS-1 | ... | SL PRS-(P-1) | GP |
|-----|-----------|----------|----------|-----|--------------|----|-----|----------|----------|-----|--------------|----|-----|----------|----------|-----|--------------|----|
|  | ... |  |  |  |  |  |  |  |  |  |  |  |  |  |  |  |  |  |
|  | SCI-1 |  |  |  |  |  |  |  |  |  |  |  |  |  |  |  |  |  |
|  | SCI-0 |  |  |  |  |  |  |  |  |  |  |  |  |  |  |  |  |  |

The rest procedures are the same as in Embodiment I. In this way, it is necessary to introduce a slot parameter into the mapping relationship, which may achieve cross slot scheduling.

Example III

The terminal is pre-configured with a dedicated resource pool for SL positioning, as shown in Table 1. Two SL PRS resources occupy the same OFDM symbol through frequency division multiplexing. For example, SL PRS-0 and SL PRS-1 occupy the same 2 OFDM symbols. The system predefines that SL PRS resources occupying the same symbol are mapped to the same SCI resource. That is, all SL PRS resources occupying the first symbol position are mapped to SCI resource 0, and all SL PRS resources occupying the second symbol position are mapped to SCI resource 1, and so on.

In this way, SCI-0 has a mapping relationship with SL PRS-0 and SL PRS-1, and SCI-1 has a mapping relationship with SL PRS-2 and SL PRS-3, and so on.

In another implementation, the system predefines that the SCI resource numbering and the frequency-domain position of the SL PRS resource satisfy a mapping relationship. For example, the corresponding relationship with the SCI resource is determined based on the starting subcarrier position of the SL PRS resource. That is, all SL PRS resources starting from subcarrier 0 are mapped to SCI resource 0, and all SL PRS resources starting from subcarrier 1 are mapped to SCI resource 1.

In another implementation, the SCI resource numbering and the time-domain position and the frequency-domain position of the SL PRS resource satisfy a mapping relationship. For example, the corresponding relationship with the SCI resource is determined based on the occupied OFDM symbol position and starting subcarrier position of the SL PRS resource. That is, all SL PRS resources occupying the first symbol position and starting from subcarrier 0 are mapped to SCI resource 1, all SL PRS resources occupying the first symbol position and starting from subcarrier 1 are mapped to SCI resource 2, all SL PRS resources occupying the second symbol position and starting from subcarrier 0 are mapped to SCI resource 3, and all SL PRS resources occupying the second symbol position and starting from subcarrier 1 are mapped to SCI resource 4.

The rest procedures are the same as in Embodiment I and will not be repeated.

Example IV

The terminal is pre-configured with a dedicated resource pool for SL positioning, as shown in Table 6. Four SL PRS resources occupy the same OFDM symbol through frequency division multiplexing. For example, SL PRS-0, SL PRS-1, SL PRS-2, and SL PRS-3 use a comb size of 4, and occupy the same 4 OFDM symbols, as shown in FIG. 3, where the grids of different patterns represent the positions of different SL PRS resources on the RE. The system predefines that the comb size and/or RE offset of the SCI resource numbering and the SL PRS resource satisfy a mapping relationship.

For example, the corresponding relationship with the SCI resource is determined based on the comb size of the SL PRS resource. It is assumed that an SL PRS resource with a comb size of 4 is mapped to four SCI resources numbered 0-3, a group of SL PRS resources with a comb size of 4 are sequentially SL PRS-0, SL PRS-1, SL PRS-2, and SL PRS-3 in the order of RE offset, where SL PRS-0 is mapped to SCI-0, SL PRS-1 mapped to SCI-1, SL PRS-2 mapped to SCI-2, and SL PRS-3 mapped to SCI-3.

For example, the corresponding relationship with the SCI resource is determined based on the RE offset of the SL PRS resource. It is assumed that a group of SL PRS resources are SL PRS-4, SL PRS-5, SL PRS-6, and SL PRS-7, with corresponding RE offsets of 0, 1, 2, and 3, mapped to four SCI resources numbered 0-3, where the SL PRS resource with RE offset 0 (SL PRS-4) is mapped to SCI-0, the SL PRS resource (SL PRS-5) with RE offset of 1 mapped to SCI-1, the SL PRS resource (SL PRS-6) with RE offset of 2 mapped to SCI-2, and the SL PRS resource (SL PRS-7) with RE offset of 7 mapped to SCI-3.

For example, the corresponding relationship with the SCI resource is determined based on the comb size and the RE offset of the SL PRS resource. It is assumed that a group of SL PRS resources with comb size 4, i.e., SL PRS-0, SL PRS-1, SL PRS-2, and SL PRS-3, with corresponding RE offsets of 0, 1, 2, and 3, are mapped to four SCI resources numbered 0-3, where the SL PRS resource with comb size 4 and RE offset 0 (SL PRS-0) is mapped to SCI-0, the SL PRS resource with comb size 4 and RE offset 1 (SL PRS-1) mapped to SCI-1, the SL PRS resource with comb size 4 and RE offset 2 (SL PRS-2) mapped to SCI-2, and the SL PRS resource with comb size 4 and RE offset 3 (SL PRS-2) mapped to SCI-3.

Table 6 Resource Pool Structure Example 6

| AGC | SCI-(M-1) | SL PRS-0 | SL PRS-4 | GP |
| | ... | /SL PRS-1 | /SL PRS-5 | |
| | SCI-1 | /SL PRS-2 | /SL PRS-6 | |

(continued)

| | SCI-0 | /SL PRS-3 | /SL PRS-7 | |
|---|---|---|---|---|

The rest procedures are the same as in Embodiment I and will not be repeated.

Example V

The terminal is pre-configured with a dedicated resource pool for SL positioning, as shown in Table 3. Each SL PRS resource is further allocated with one or more SCI resource numberings associated with each SL PRS resource through a higher-level signaling. The higher-level signaling here may be the LPP signaling, the SLPP signaling, or the RRC signaling. For example, associated SCI-0 and SCI-1 are configured for SL PRS-0, and associated SCI-2 and SCI-3 are configured for SL PRS-1. The terminal receives the higher-level signaling and determines the mapping relationship between the SCI resource and the SL PRS resource. The rest is the same as in Embodiment I and will not be repeated.

Furthermore, the higher-level signaling may also be configured with slot numberings to support SCI resources from other slots for cross slot scheduling. For example, SCI-0 associated with a current slot and SCI-0 in a previous slot are configured for SL PRS-0.

Example VI

The terminal is pre-configured with a dedicated resource pool for SL positioning, as shown in Table 7, which presents structures of the PSCCH resource and the SL PRS resource within one slot. This includes M PSCCH resources and N SL PRS resources.

Table 7: Resource Pool Structure Example 7

| | PSCCH-(M-1) | | | | | | |
|---|---|---|---|---|---|---|---|
| AGC | ... | SL PRS-0 | SL PRS-1 | ... | SL PRS-(N-1) | GP |
| | PSCCH-1 | | | | | | |
| | PSCCH-0 | | | | | | |

The system predefines that the SL PRS resource numbering (j) and the PSCCH resource numbering (i) satisfy a mapping relationship. A predefined mapping relationship is:

$$j = i \bmod N, \ i = 0, \ 1,..., \ M\text{-}1.$$

Mod represents modulo operation. In this case, one SL PRS resource may correspond to multiple PSCCH resources. For example, M = 8, N = 4, SL PRS-0 may be mapped to PSCCH-0 and PSCCH-4.

In case that the target terminal performs RTT positioning, the target terminal selects PSCCH-0 and activates the resource transmission of SL PRS-0 based on the above mapping relationship, while determining the anchor terminal.

The anchor terminal determines to receive SL PRS-0 by sensing PSCCH-0 (successfully decoding PSCCH-0). At the same time, the anchor terminal selects PSCCH-1 (which may be any PSCCH other than PSCCH-0 and PSCCH-4) and activates the resource transmission of SL PRS-1 based on the above mapping relationship.

The anchor terminal determines the SL Rx Tx time difference based on the reception of SL PRS-0 and the transmission of SL PRS-1, and provides feedback to the target terminal. The target terminal determines to receive SL PRS-1 by sensing PSCCH-1. The target terminal determines the SL Rx Tx time difference based on the transmission of SL PRS-0 and the reception of SL PRS-1. At the same time, an RTT value is determined based on the SL Rx Tx time difference feedback from the anchor terminal, and the relative distance between the target terminal and the anchor terminal is obtained. Thereby relative positioning between the target terminal and the anchor terminal is achieved.

Another mapping relationship may be:

$$i = j \bmod M, \ j = 0, \ 1,..., \ N\text{-}1.$$

In this case, one PSCCH resource may correspond to multiple SL PRS resources. For example, M = 4, N = 8, PSCCH-0 resource may be mapped to SL PRS-0 and SL PRS-4.

In case that the target terminal performs RTT positioning, the target terminal selects PSCCH-0, and selects to activate, based on the above mapping relationship, the resource transmission of SL PRS-0 between SL PRS-0 and SL PRS-4. This selection is indicated in PSCCH-0 and the anchor terminal is determined.

The anchor terminal determines to receive SL PRS-0 by sensing PSCCH-0. At the same time, the anchor terminal selects PSCCH-1, and selects to activate, based on the above mapping relationship, the resource transmission of SL PRS-1 between SL PRS-1 and SL PRS-5. This selection is indicated in PSCCH-1. The rest procedures are the same as before and will not be repeated.

Furthermore, the above provided is that SL PRS resource 0 to SL PRS resource N-1 are in the same slot. This scheme may also be used for that SL PRS resource 0 to SL PRS resource N-1 are in different slots.

The above avoids collisions of the SL PRS resources and reduces interference by using different PSCCH resources for the anchor terminal and the target terminal, and corresponding different SL PRS resources based on the mapping relationship.

Example VII

The terminal is pre-configured with a dedicated resource pool for SL positioning, as shown in Table 8, which presents structures of the PSCCH resource and the SL PRS resource within two slot. One of the slots includes M PSCCH resources and N SL PRS resources (a first slot), while the other slot (a second slot) includes only L SL PRS resources.

Table 8 Resource Pool Structure Example 8

| AGC | PSCCH-(M-1) ... PSCCH-1 PSCCH-0 | SL PRS-0 | SL PRS-1 | ... | SL PRS-(N-1) | GP | AGC | SL PRS-0 | SL PRS-1 | ... | SL PRS-(L-1) | GP |
|---|---|---|---|---|---|---|---|---|---|---|---|---|
| | | | | | | | | | | | | |

The system predefines that the SL PRS resource (j) and the PSCCH resource numbering (i) satisfy a mapping relationship. The numbering of SL PRS resources in multiple slots is K = N+L. Taking Table 8 as an example, a predefined mapping relationship is:

for the first slot, j = i mod K, i = 0, 1,..., M-1;
for the second slot, j = i mod K-N, i = 0, 1,..., M-1.

Another implementation is:

for the first slot, i = j mod M, j = 0, 1,..., N-1;
for the second slot, i = (j+N) mod M, j = 0, 1 ,..., L-1.

As shown in Table 9, a scenario with 3 slots is presented, where K = N+L+P. A predefined mapping relationship is:

for the first slot, j = i mod K, i = 0, 1,..., M-1;
for the second slot, j = i mod K-N, i = 0, 1,..., M-1; and
for the third slot, j = i mod K-(N+L), i = 0, 1,..., M-1.

Another implementation is:

for the first slot, i = j mod M, j = 0, 1,..., N-1;
for the second slot, i = (j+N) mod M, j = 0, 1,..., L-1; and
for the third slot, i = (j+N+L) mod M, j = 0, 1,..., P-1.

Table 9 Resource Pool Structure Example 9

| AGC | PSC CH-(M-1) ... PSC CH-1 PSC CH-0 | SL PRS-0 | SL PRS-1 | ... | SL PRS-(N-1) | GP | AGC | SL PRS-0 | SL PRS-1 | ... | SL PRS-(L-1) | GP | AGC | SL PRS-0 | SL PRS-1 | ... | SL PRS-(P-1) | GP |
|---|---|---|---|---|---|---|---|---|---|---|---|---|---|---|---|---|---|---|
| | | | | | | | | | | | | | | | | | | |

The rest procedures are the same as Embodiment VI. In this way, it is necessary to introduce a slot parameter into the mapping relationship, which may achieve cross slot scheduling.

Example VII

The terminal is pre-configured with a dedicated resource pool for SL positioning, as shown in Table 2. Two SL PRS resources occupy the same OFDM symbol through frequency division multiplexing. For example, SL PRS-0 and SL PRS-1 occupy the same 2 OFDM symbols. The system predefines that SL PRS resources occupying the same symbol are mapped to the same PSCCH resource. That is, all SL PRS resources occupying the first symbol position are mapped to PSCCH resource 0, and all SL PRS resources occupying the second symbol position are mapped to PSCCH resource 1, and so on.

In this way, PSCCH-0 has a mapping relationship with SL PRS-0 and SL PRS-1, and PSCCH-1 has a mapping relationship with SL PRS-2 and SL PRS-3, and so on.

In another implementation, the system predefines that the PSCCH resource numbering and the frequency-domain position of the SL PRS resource satisfy a mapping relationship. For example, the corresponding relationship with the PSCCH resource is determined based on the starting subcarrier position of the SL PRS resource. That is, all SL PRS resources starting from subcarrier 0 are mapped to PSCCH resource 0, and all SL PRS resources starting from subcarrier 1 are mapped to PSCCH resource 1.

In another implementation, the PSCCH resource numbering and the time-domain position and the frequency-domain position of the SL PRS resource satisfy a mapping relationship. For example, the corresponding relationship with the PSCCH resource is determined based on the occupied OFDM symbol position and starting subcarrier position of the SL PRS resource. That is, all SL PRS resources occupying the first symbol position and starting from subcarrier 0 are mapped to PSCCH resource 1, all SL PRS resources occupying the first symbol position and starting from subcarrier 1 are mapped to PSCCH resource 2, all SL PRS resources occupying the second symbol position and starting from subcarrier 0 are mapped to PSCCH resource 3, and all SL PRS resources occupying the second symbol position and starting from subcarrier 1 are mapped to PSCCH resource 4.

The rest procedures are the same as Embodiment VI and will not be repeated.

Example IX

The terminal is pre-configured with a dedicated resource pool for SL positioning, as shown in Table 10. Four SL PRS resources occupy the same OFDM symbol through frequency division multiplexing. For example, SL PRS-0, SL PRS-1, SL PRS-2, and SL PRS-3 use a comb size of 4, and occupy the same 4 OFDM symbols, as shown in FIG. 2, where the grids of different patterns represent the positions of different SL PRS resources on the RE. The system predefines that the comb size and/or RE offset of the PSCCH resource numbering and the SL PRS resource satisfy a mapping relationship.

For example, the corresponding relationship with the PSCCH resource is determined based on the comb size of the SL PRS resource. It is assumed that an SL PRS resource with a comb size of 4 is mapped to four PSCCH resources numbered 0-3, a group of SL PRS resources with a comb size of 4 are sequentially SL PRS-0, SL PRS-1, SL PRS-2, and SL PRS-3 in the order of RE offset, where SL PRS-0 is mapped to PSCCH-0, SL PRS-1 mapped to PSCCH-1, SL PRS-2 mapped to PSCCH-2, and SL PRS-3 mapped to PSCCH-3.

For example, the corresponding relationship with the PSCCH resource is determined based on the RE offset of the SL PRS resource. It is assumed that a group of SL PRS resources are SL PRS-4, SL PRS-5, SL PRS-6, and SL PRS-7, with corresponding RE offsets of 0, 1, 2, and 3, mapped to four PSCCH resources numbered 0-3, where the SL PRS resource with RE offset 0 (SL PRS-4) is mapped to PSCCH-0, the SL PRS resource (SL PRS-5) with RE offset of 1 mapped to PSCCH-1, the SL PRS resource (SL PRS-6) with RE offset of 2 mapped to PSCCH-2, and the SL PRS resource (SL PRS-7) with RE offset of 7 mapped to PSCCH-3.

For example, the corresponding relationship with the PSCCH resource is determined based on the comb size and the RE offset of the SL PRS resource. It is assumed that a group of SL PRS resources with comb size 4, i.e., SL PRS-0, SL PRS-1, SL PRS-2, and SL PRS-3, with corresponding RE offsets of 0, 1, 2, and 3, are mapped to four PSCCH resources numbered 0-3, where the SL PRS resource with comb size 4 and RE offset 0 (SL PRS-0) is mapped to PSCCH-0, the SL PRS resource with comb size 4 and RE offset 1 (SL PRS-1) mapped to PSCCH-1, the SL PRS resource with comb size 4 and RE offset 2 (SL PRS-2) mapped to PSCCH-2, and the SL PRS resource with comb size 4 and RE offset 3 (SL PRS-2) mapped to PSCCH-3.

Table 10 Resource Pool Structure Example 10

| AGC | PSCCH-(M-1) | SL PRS-0 | SL PRS-4 | GP |
|-----|-------------|----------|----------|-----|
| | ... | /SL PRS-1 | /SL PRS-5 | |
| | PSCCH-1 | /SL PRS-2 | /SL PRS-6 | |
| | PSCCH-0 | /SL PRS-3 | /SL PRS-7 | |

The rest procedures are the same as Embodiment VI and will not be repeated.

Example X

The terminal is pre-configured with a dedicated resource pool for SL positioning, as shown in Table 7. Each SL PRS resource is further configured with one or more PSCCH resource numberings associated with each SL PRS resource through a higher-level signaling. The higher-level signaling here may be the LPP signaling, the SLPP signaling, or the RRC signaling. For example, associated PSCCH-0 and PSCCH-1 are configured for SL PRS-0, and associated PSCCH-2 and PSCCH-3 are configured for SL PRS-1. The terminal receives the higher-level signaling and determines the mapping relationship between the PSCCH resource and the SL PRS resource. The rest is the same as Embodiment VI and will not be repeated.

Furthermore, the higher-level signaling may also be configured with slot numberings to support PSCCH resources from other slots for cross slot scheduling. For example, PSCCH-0 associated with a current slot and PSCCH-0 in a previous slot are configured for SL PRS-0.

The methods and apparatuses provided in each embodiment of the present application are based on the same application concept. As the principles of problem-solving by the methods and apparatuses are similar, the implementation of the apparatuses and methods may be referred to each other, and repetition will not be repeated.

FIG. 4 is a first schematic structural diagram of a first terminal according to an embodiment of the present application. As shown in FIG. 4, the first terminal includes a memory 420, a transceiver 410, and a processor 400, where the processor 400 and the memory 420 may also be arranged physically separately.

The memory 420 is used for storing a computer program, and the transceiver 400 is used for receiving and transmitting data under control of the processor 400.

In an embodiment, the transceiver 410 is used to receive and transmit data under control of the processor 400.

In FIG. 4, a bus architecture may include any number of interconnected buses and bridges, which are linked together through various circuits of one or more processors represented by the processor 400 and one or more memories represented by the memory 420. The bus architecture may also link together various other circuits, such as peripherals, voltage regulators, and power management circuits, which are well known in the art, and therefore will not be further described in the present application. The bus interface provides an interface. The transceiver 410 may include multiple elements, i.e., a transmitter and a receiver, units for providing communication with various other devices over transmission media including wireless channels, wired channels, fiber optic cables, and the like. For different user equipment, a user interface 430 may be an interface capable of externally or internally connecting the required device, and the connected device includes, but not limited to, a keypad, a display, a speaker, a microphone, a joystick, and the like.

The processor 400 is responsible for managing the bus architecture and general processing, and the memory 420 may store data used by the processor 400 when performing operations.

The processor 400 may be a central processing unit (CPU), an application specific integrated circuit (ASIC), a field-programmable gate array (FPGA), or a complex programmable logic device (CPLD). The processor may also use a multi-core architecture.

The processor 400 calls the computer program stored in the memory 420 to perform any of the methods provided in embodiments of the present application according to the obtained executable instructions, such as:
determining a sidelink control information (SCI) resource and/or a sidelink positioning reference signal (SL PRS) resource to be used based on a mapping relationship between the SCI resource and the SL PRS resource.

In some embodiments, the mapping relationship between the SCI resource and the SL PRS resource includes one or more of:

a mapping relationship between an SCI resource numbering and an SL PRS resource numbering or an SL PRS resource set numbering;

a mapping relationship between an SCI resource numbering and a time-domain position of the SL PRS resource;

a mapping relationship between an SCI resource numbering and a frequency-domain position of the SL PRS resource;

a mapping relationship between an SCI resource numbering and a time-domain position and a frequency-domain position of the SL PRS resource;

a mapping relationship between an SCI resource numbering and a comb size of the SL PRS resource;

a mapping relationship between an SCI resource numbering and a resource unit offset of the SL PRS resource; or

a mapping relationship between an SCI resource numbering and a comb size and a resource unit offset of the SL PRS resource.

In some embodiments, the mapping relationship between the SCI resource numbering and the SL PRS resource numbering or the SL PRS resource set numbering includes:

a mapping relationship between each SCI resource numbering and at least one SL PRS resource numbering or at least one SL PRS resource set numbering; or

a mapping relationship between each SL PRS resource numbering or each SL PRS resource set numbering and at least one SCI resource numbering.

In some embodiments, the mapping relationship between the SCI resource numbering and the SL PRS resource numbering or the SL PRS resource set numbering satisfies the following mapping formula:

$$j = i \bmod N, i = 0, 1,..., M\text{-}1;$$

or

$$i = j \bmod M, j = 0, 1,..., N\text{-}1;$$

where j is the SL PRS resource numbering or the SL PRS resource set numbering; i is the SCI resource numbering; N-1 is a maximum value of the SL PRS resource numbering or a maximum value of the SL PRS resource set numbering in a resource pool; and M-1 is a maximum SCI resource numbering in the resource pool.

In some embodiments, the mapping relationship between the SCI resource numbering and the SL PRS resource numbering or the SL PRS resource set numbering satisfies the following mapping formula:

$$j = i \bmod K\text{-}L, i = 0, 1,..., M\text{-}1;$$

or

$$i = ( j\text{+}L ) \bmod M, j = 0, 1,..., P\text{-}1;$$

where j is the SL PRS resource numbering or the SL PRS resource set numbering within a target slot; i is the SCI resource numbering; K is a total quantity of the SL PRS resources or SL PRS resource sets included in a resource pool; M-1 is a maximum SCI resource numbering in the resource pool; L is a total quantity of the SL PRS resources or SL PRS resource sets in the resource pool included in slots before the target slot; and P-1 is a maximum value of the SL PRS resource numbering or a maximum value of the SL PRS resource set numbering within the target slot.

In some embodiments, the mapping relationship between the SCI resource numbering and the time-domain position of the SL PRS resource includes:

a mapping relationship that SL PRS resources occupying a same time-domain position are mapped to a same SCI resource numbering.

In some embodiments, the mapping relationship between the SCI resource numbering and the frequency-domain position of the SL PRS resource includes:

a mapping relationship that SL PRS resources with a same starting frequency-domain position are mapped to a same SCI resource numbering.

In some embodiments, the mapping relationship between the SCI resource numbering and the time-domain position and the frequency-domain position of the SL PRS resource includes:

a mapping relationship that SL PRS resources with a same starting frequency-domain position and occupying a same time-domain position are mapped to a same SCI resource numbering.

In some embodiments, the mapping relationship between the SCI resource and the SL PRS resource is predefined or pre-configured.

In some embodiments, the mapping relationship between the SCI resource and the SL PRS resource is indicated by a higher-level signaling.

In some embodiments, the mapping relationship between the SCI resource numbering and the SL PRS resource numbering or the SL PRS resource set numbering includes:

a mapping relationship among the SCI resource numbering, the SL PRS resource numbering, and a slot numbering; or, a mapping relationship among the SCI resource numbering, the SL PRS resource set numbering, and a slot numbering.

In some embodiments, determining the SCI resource and/or the SL PRS resource to be used based on the mapping relationship between the SCI resource and the SL PRS resource includes:

receiving SCI transmitted from a second terminal; and

determining the SCI resource and/or the SL PRS resource to be used based on the SCI and the mapping relationship between the SCI resource and the SL PRS resource;

where a SCI resource used by the first terminal is different from a SCI resource used by the second terminal, and an SL PRS resource used by the first terminal is different from an SL PRS resource used by the second terminal.

In some embodiments, the higher-level signaling includes at least one of a long term evolution positioning protocol (LPP) signaling, a sidelink positioning protocol (SLPP) signaling, or a radio resource control (RRC) signaling.

In some embodiments, the SCI resource and the SL PRS resource determined to be used by the first terminal are in a same slot, or the SCI resource and the SL PRS resource determined to be used by the first terminal are in different slots.

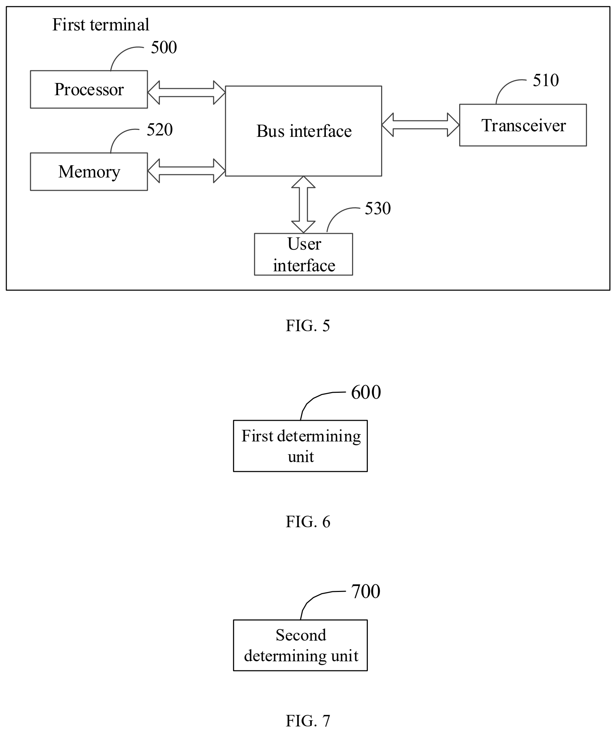

FIG. 5 is a second schematic structural diagram of a first terminal according to an embodiment of the present application. As shown in FIG. 5, the first terminal includes a memory 520, a transceiver 510, and a processor 500, where the processor 500 and the memory 520 may also be arranged physically separately.

The memory 520 is used for storing a computer program, and the transceiver 510 is used for receiving and transmitting data under control of the processor 500.

In an embodiment, the transceiver 510 is used to receive and transmit data under control of the processor 500.

In FIG. 5, a bus architecture may include any number of interconnected buses and bridges, which are linked together through various circuits of one or more processors represented by the processor 500 and one or more memories represented by the memory 520. The bus architecture may also link together various other circuits, such as peripherals, voltage regulators, and power management circuits, which are well known in the art, and therefore will not be further described in the present application. The bus interface provides an interface. The transceiver 510 may include multiple elements, i.e., a transmitter and a receiver, units for providing communication with various other devices over transmission media including wireless channels, wired channels, fiber optic cables, and the like.

The processor 500 is responsible for managing the bus architecture and general processing, and the memory 520 may store data used by the processor 500 when performing operations.

The processor 500 may be a CPU, ASIC, FPGA, or CPLD, and the processor may also adopt a multi-core architecture.

The processor 500 calls the computer program stored in the memory 520 to perform any of the methods provided in embodiments of the present application according to the obtained executable instructions, such as:

determining a physical sidelink control channel (PSCCH) resource and/or a sidelink positioning reference signal (SL PRS) resource to be used based on a mapping relationship between a resource carrying the PSCCH and the SL PRS resource.

In some embodiments, the mapping relationship between the resource carrying the PSCCH and the SL PRS resource includes one or more of:

a mapping relationship between a numbering of the resource carrying the PSCCH and an SL PRS resource numbering or an SL PRS resource set numbering;

a mapping relationship between the resource carrying the PSCCH and a time-domain position of the SL PRS resource;

a mapping relationship between the resource carrying the PSCCH and a frequency-domain position of the SL PRS resource;

a mapping relationship between the resource carrying the PSCCH and a time-domain position and a frequency-domain position of the SL PRS resource;

a mapping relationship between the resource carrying the PSCCH and a comb size of the SL PRS resource;

a mapping relationship between the resource carrying the PSCCH and a resource unit offset of the SL PRS resource; or

a mapping relationship between the resource carrying the PSCCH and a comb size and a resource unit offset of the SL PRS resource.

In some embodiments, the mapping relationship between the numbering of the resource carrying the PSCCH and the SL PRS resource numbering or the SL PRS resource set numbering includes:

a mapping relationship between each numbering of the resource carrying the PSCCH and at least one SL PRS resource numbering or at least one SL PRS resource set numbering; or
a mapping relationship between each SL PRS resource numbering or each SL PRS resource set numbering and at least one numbering of the resource carrying the PSCCH.

In some embodiments, the mapping relationship between the numbering of the resource carrying the PSCCH and the SL PRS resource numbering or the SL PRS resource set numbering satisfies the following mapping formula:

$$j = i \bmod N, i = 0, 1,..., M-1$$

or

$$i = j \bmod M, j = 0, 1,..., N-1;$$

where j is the SL PRS resource numbering or the SL PRS resource set numbering; i is the numbering of the resource carrying the PSCCH; N-1 is a maximum value of the SL PRS resource numbering or a maximum value of the SL PRS resource set numbering in a resource pool; and M-1 is a maximum value of the numbering of the resource carrying the PSCCH in the resource pool.

In some embodiments, the mapping relationship between the numbering of the resource carrying the PSCCH and the SL PRS resource numbering or the SL PRS resource set numbering satisfies the following mapping formula:

$$j = i \bmod K\text{-}L, i = 0, 1,..., M-1;$$

or

$$i = ( j+L ) \bmod M, j = 0, 1,..., P-1;$$

where j is the SL PRS resource numbering or the SL PRS resource set numbering within a target slot; i is the numbering of the resource carrying the PSCCH; K is a total quantity of the SL PRS resources or SL PRS resource sets included in a resource pool; M-1 is a maximum value of the numbering of the resource carrying the PSCCH in the resource pool; L is a total quantity of the SL PRS resources or SL PRS resource sets in the resource pool included in slots before the target slot; and P-1 is a maximum value of the SL PRS resource numbering or a maximum value of the SL PRS resource set numbering within the target slot.

In some embodiments, the mapping relationship between the resource carrying the PSCCH and the time-domain position of the SL PRS resource includes:
a mapping relationship that SL PRS resources occupying a same time-domain position are mapped to a same resource carrying the PSCCH.

In some embodiments, the mapping relationship between the resource carrying the PSCCH and the frequency-domain position of the SL PRS resource includes:
a mapping relationship that SL PRS resources with a same starting frequency-domain position are mapped to a same resource carrying the PSCCH.

In some embodiments, the mapping relationship between the resource carrying the PSCCH and the time-domain position and the frequency-domain position of the SL PRS resource includes:
a mapping relationship that SL PRS resources with a same starting frequency-domain position and occupying a same time-domain position are mapped to a same resource carrying the PSCCH.

In some embodiments, the mapping relationship between the resource carrying the PSCCH and the SL PRS resource is predefined or pre-configured.

In some embodiments, the mapping relationship between the resource carrying the PSCCH and the SL PRS resource is indicated by a higher-level signaling.

In some embodiments, the mapping relationship between the numbering of the resource carrying the PSCCH and the SL PRS resource numbering or the SL PRS resource set numbering includes:

a mapping relationship among the numbering of the resource carrying the PSCCH, the SL PRS resource numbering, and a slot numbering; or, a mapping relationship among the numbering of the resource carrying the PSCCH, the SL PRS resource set numbering, and a slot numbering.

In some embodiments, determining the PSCCH resource and/or the SL PRS resource to be used based on a mapping relationship between a resource carrying the PSCCH and the SL PRS resource includes:

receiving sidelink control information (SCI) transmitted from a second terminal; and

determining the PSCCH resource and/or the SL PRS resource to be used based on the SCI and the mapping relationship between the resource carrying the PSCCH and the SL PRS resource;

where a PSCCH resource used by the first terminal is different from a PSCCH resource used by the second terminal, and an SL PRS resource used by the first terminal is different from an SL PRS resource used by the second terminal.

In some embodiments, the higher-level signaling includes at least one of a long term evolution positioning protocol (LPP) signaling, a sidelink positioning protocol (SLPP) signaling, or a radio resource control (RRC) signaling.

In some embodiments, the PSCCH resource and the SL PRS resource determined to be used by the first terminal are in a same slot, or the PSCCH resource and the SL PRS resource determined to be used by the first terminal are in different slots.

It should be noted that the first terminal provided in embodiments of the present application may implement all the method steps implemented in the above method embodiments and achieve the same technical effects. Therefore, the same parts and beneficial effects as the method embodiments in this embodiment will not be repeated here.

FIG. 6 is a first schematic structural diagram of a resource allocation apparatus for sidelink positioning according to an embodiment of the present application. As shown in FIG. 6, the apparatus includes:

a first determining unit 600, used for determining a sidelink control information (SCI) resource and/or a sidelink positioning reference signal (SL PRS) resource to be used based on a mapping relationship between the SCI resource and the SL PRS resource.

In some embodiments, the mapping relationship between the SCI resource and the SL PRS resource includes one or more of:

a mapping relationship between an SCI resource numbering and an SL PRS resource numbering or an SL PRS resource set numbering;

a mapping relationship between an SCI resource numbering and a time-domain position of the SL PRS resource;

a mapping relationship between an SCI resource numbering and a frequency-domain position of the SL PRS resource;

a mapping relationship between an SCI resource numbering and a time-domain position and a frequency-domain position of the SL PRS resource;

a mapping relationship between an SCI resource numbering and a comb size of the SL PRS resource;

a mapping relationship between an SCI resource numbering and a resource unit offset of the SL PRS resource; or

a mapping relationship between an SCI resource numbering and a comb size and a resource unit offset of the SL PRS resource.

In some embodiments, the mapping relationship between the SCI resource numbering and the SL PRS resource numbering or the SL PRS resource set numbering includes:

a mapping relationship between each SCI resource numbering and at least one SL PRS resource numbering or at least one SL PRS resource set numbering; or

a mapping relationship between each SL PRS resource numbering or each SL PRS resource set numbering and at least one SCI resource numbering.

In some embodiments, the mapping relationship between the SCI resource numbering and the SL PRS resource numbering or the SL PRS resource set numbering satisfies the following mapping formula:

$$j = i \bmod N, \ i = 0, \ 1,..., \ M\text{-}1;$$

or

$$i = j \bmod M, \, j = 0, \, 1, ..., \, N\text{-}1;$$

where j is the SL PRS resource numbering or the SL PRS resource set numbering; i is the SCI resource numbering; N-1 is a maximum value of the SL PRS resource numbering or a maximum value of the SL PRS resource set numbering in a resource pool; and M-1 is a maximum SCI resource numbering in the resource pool.

In some embodiments, the mapping relationship between the SCI resource numbering and the SL PRS resource numbering or the SL PRS resource set numbering satisfies the following mapping formula:

$$j = i \bmod K\text{-}L, \, i = 0, \, 1, ..., \, M\text{-}1;$$

or

$$i = ( \, j\text{+}L \, ) \bmod M, \, j = 0, \, 1, ..., \, P\text{-}1;$$

where j is the SL PRS resource numbering or the SL PRS resource set numbering within a target slot; i is the SCI resource numbering; K is a total quantity of the SL PRS resources or SL PRS resource sets included in a resource pool; M-1 is a maximum SCI resource numbering in the resource pool; L is a total quantity of the SL PRS resources or SL PRS resource sets in the resource pool included in slots before the target slot; and P-1 is a maximum value of the SL PRS resource numbering or a maximum value of the SL PRS resource set numbering within the target slot.

In some embodiments, the mapping relationship between the SCI resource numbering and the time-domain position of the SL PRS resource includes:

a mapping relationship that SL PRS resources occupying a same time-domain position are mapped to a same SCI resource numbering.

In some embodiments, the mapping relationship between the SCI resource numbering and the frequency-domain position of the SL PRS resource includes:

a mapping relationship that SL PRS resources with a same starting frequency-domain position are mapped to a same SCI resource numbering.

In some embodiments, the mapping relationship between the SCI resource numbering and the time-domain position and the frequency-domain position of the SL PRS resource includes:

a mapping relationship that SL PRS resources with a same starting frequency-domain position and occupying a same time-domain position are mapped to a same SCI resource numbering.

In some embodiments, the mapping relationship between the SCI resource and the SL PRS resource is predefined or pre-configured.

In some embodiments, the mapping relationship between the SCI resource and the SL PRS resource is indicated by a higher-level signaling.

In some embodiments, the mapping relationship between the SCI resource numbering and the SL PRS resource numbering or the SL PRS resource set numbering includes:

a mapping relationship among the SCI resource numbering, the SL PRS resource numbering, and a slot numbering; or, a mapping relationship among the SCI resource numbering, the SL PRS resource set numbering, and a slot numbering.

In some embodiments, determining the SCI resource and/or the SL PRS resource to be used based on the mapping relationship between the SCI resource and the SL PRS resource includes:

receiving SCI transmitted from a second terminal; and
determining the SCI resource and/or the SL PRS resource to be used based on the SCI and the mapping relationship between the SCI resource and the SL PRS resource;
where a SCI resource used by the first terminal is different from a SCI resource used by the second terminal, and an SL PRS resource used by the first terminal is different from an SL PRS resource used by the second terminal.

In some embodiments, the higher-level signaling includes at least one of a long term evolution positioning protocol (LPP) signaling, a sidelink positioning protocol (SLPP) signaling, or a radio resource control (RRC) signaling.

In some embodiments, the SCI resource and the SL PRS resource determined to be used by the first terminal are in a same slot, or the SCI resource and the SL PRS resource determined to be used by the first terminal are in different slots.

FIG. 7 is a second schematic structural diagram of a resource allocation apparatus for sidelink positioning according to an embodiment of the present application. As shown in FIG. 7, the apparatus includes:

a second determining unit 700, used for determining a physical sidelink control channel (PSCCH) resource and/or a sidelink positioning reference signal (SL PRS) resource to be used based on a mapping relationship between a resource carrying the PSCCH and the SL PRS resource.

In some embodiments, the mapping relationship between the resource carrying the PSCCH and the SL PRS resource includes one or more of:

a mapping relationship between a numbering of the resource carrying the PSCCH and an SL PRS resource numbering or an SL PRS resource set numbering;
a mapping relationship between the resource carrying the PSCCH and a time-domain position of the SL PRS resource;
a mapping relationship between the resource carrying the PSCCH and a frequency-domain position of the SL PRS resource;
a mapping relationship between the resource carrying the PSCCH and a time-domain position and a frequency-domain position of the SL PRS resource;
a mapping relationship between the resource carrying the PSCCH and a comb size of the SL PRS resource;
a mapping relationship between the resource carrying the PSCCH and a resource unit offset of the SL PRS resource; or
a mapping relationship between the resource carrying the PSCCH and a comb size and a resource unit offset of the SL PRS resource.

In some embodiments, the mapping relationship between the numbering of the resource carrying the PSCCH and the SL PRS resource numbering or the SL PRS resource set numbering includes:

a mapping relationship between each numbering of the resource carrying the PSCCH and at least one SL PRS resource numbering or at least one SL PRS resource set numbering; or
a mapping relationship between each SL PRS resource numbering or each SL PRS resource set numbering and at least one numbering of the resource carrying the PSCCH.

In some embodiments, the mapping relationship between the numbering of the resource carrying the PSCCH and the SL PRS resource numbering or the SL PRS resource set numbering satisfies the following mapping formula:

$$j = i \bmod N, i = 0, 1,..., M\text{-}1;$$

or

$$i = j \bmod M, j = 0, 1,..., N\text{-}1;$$

where j is the SL PRS resource numbering or the SL PRS resource set numbering; i is the numbering of the resource carrying the PSCCH; N-1 is a maximum value of the SL PRS resource numbering or a maximum value of the SL PRS resource set numbering in a resource pool; and M-1 is a maximum value of the numbering of the resource carrying the PSCCH in the resource pool.

In some embodiments, the mapping relationship between the numbering of the resource carrying the PSCCH and the SL PRS resource numbering or the SL PRS resource set numbering satisfies the following mapping formula:

$$j = i \bmod K\text{-}L, i = 0, 1,..., M\text{-}1;$$

or

$$i = ( j+L ) \bmod M, j = 0, 1,..., P\text{-}1;$$

where j is the SL PRS resource numbering or the SL PRS resource set numbering within a target slot; i is the numbering of the resource carrying the PSCCH; K is a total quantity of the SL PRS resources or SL PRS resource sets included in a resource pool; M-1 is a maximum value of the numbering of the resource carrying the PSCCH in the resource pool; L is a total quantity of the SL PRS resources or SL PRS resource sets in the resource pool included in slots before the target slot; and P-1 is a maximum value of the SL PRS resource numbering or a maximum value of the SL PRS resource set numbering within the target slot.

In some embodiments, the mapping relationship between the resource carrying the PSCCH and the time-domain position of the SL PRS resource includes:
a mapping relationship that SL PRS resources occupying a same time-domain position are mapped to a same resource carrying the PSCCH.

In some embodiments, the mapping relationship between the resource carrying the PSCCH and the frequency-domain position of the SL PRS resource includes:

a mapping relationship that SL PRS resources with a same starting frequency-domain position are mapped to a same resource carrying the PSCCH.

In some embodiments, the mapping relationship between the resource carrying the PSCCH and the time-domain position and the frequency-domain position of the SL PRS resource includes:

a mapping relationship that SL PRS resources with a same starting frequency-domain position and occupying a same time-domain position are mapped to a same resource carrying the PSCCH.

In some embodiments, the mapping relationship between the resource carrying the PSCCH and the SL PRS resource is predefined or pre-configured.

In some embodiments, the mapping relationship between the resource carrying the PSCCH and the SL PRS resource is indicated by a higher-level signaling.

In some embodiments, the mapping relationship between the numbering of the resource carrying the PSCCH and the SL PRS resource numbering or the SL PRS resource set numbering includes:

a mapping relationship among the numbering of the resource carrying the PSCCH, the SL PRS resource numbering, and a slot numbering; or, a mapping relationship among the numbering of the resource carrying the PSCCH, the SL PRS resource set numbering, and a slot numbering.

In some embodiments, determining the PSCCH resource and/or the SL PRS resource to be used based on a mapping relationship between a resource carrying the PSCCH and the SL PRS resource includes:

receiving sidelink control information (SCI) transmitted from a second terminal; and

determining the PSCCH resource and/or the SL PRS resource to be used based on the SCI and the mapping relationship between the PSCCH resource and the SL PRS resource;

where a PSCCH resource used by the first terminal is different from a PSCCH resource used by the second terminal, and an SL PRS resource used by the first terminal is different from an SL PRS resource used by the second terminal.

In some embodiments, the higher-level signaling includes at least one of a long term evolution positioning protocol (LPP) signaling, a sidelink positioning protocol (SLPP) signaling, or a radio resource control (RRC) signaling.

In some embodiments, the PSCCH resource and the SL PRS resource determined to be used by the first terminal are in a same slot, or the PSCCH resource and the SL PRS resource determined to be used by the first terminal are in different slots.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as a separate product, it may be stored in a computer readable storage medium. Based on such understanding, the technical solutions of the present application in essence or a part of the technical solutions that contributes to the prior art, or all or part of the technical solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store a program code such as a U disk, a mobile hard disk, a read-only memory (ROM), a random access memory (RAM), a magnetic disk, or a compact disk.

It should be noted that the above-mentioned apparatus provided in embodiments of the present application may achieve all the method steps implemented in the above-mentioned method embodiment, and may achieve the same technical effects. Therefore, specific descriptions of the same parts and beneficial effects as the method embodiment in this embodiment will not be repeated here.

Embodiments of the present application further provide a computer-readable storage medium, where the computer-readable storage medium stores a computer program for causing a computer to perform the resource allocation method for sidelink positioning provided in the above embodiments.

It should be noted that the computer-readable storage medium provided in embodiments of the present application may implement all the method steps implemented in the above method embodiments and achieve the same technical effects. Therefore, the same parts and beneficial effects as the method embodiments in this embodiment will not be specifically described here.

The computer-readable storage medium may be any available medium or data storage device that may be accessed by the computer, including but not limited to, a magnetic storage (e.g., a floppy disk, a hard disk, a magnetic tape, a magneto-optical disk (MO), etc.), optical memory (such as CD, DVD, BD, HVD, etc.), and a semiconductor memory (such as ROM, EPROM, EEPROM, non-volatile memory (NAND FLASH), solid-state drive (SSD)), etc.

The solutions provided by the embodiments of the present application may be applicable to various systems, especially a 5G system. For example, applicable systems may be a global system of mobile communication (GSM) system, a code division multiple access (CDMA) system, a wideband code division multiple access (WCDMA), general packet radio service (GPRS) system, a long term evolution (LTE) system, a LTE frequency division duplex (FDD) system, a LTE time division duplex (TDD) system, a long term evolution advanced (LTE-A) system, a universal mobile telecommunication system (UMTS), a worldwide interoperability for microwave access (WiMAX) system, a 5G new radio (NR) system, etc. These various systems include a terminal device and a network device. The system may also include a core network part, such as an evolved packet system (EPS), a 5G system (5GS), and the like.

The terminal involved in the embodiments of the present application may be a device that provides voice and/or data connectivity to a user, a hand-held device with a wireless connection function, or other processing device connected to a wireless modem. In different systems, the names of the terminal device may be different. For example, in the 5G system, the terminal device may be referred to as a user equipment (UE). A wireless terminal device may communicate with one or more core networks (CNs) via a radio access network (RAN), and the wireless terminal device may be a mobile terminal, such as a mobile phone (or referred to as a cellular phone) and a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be referred to as a system, a subscriber unit, a subscriber station, a mobile station, a mobile, a remote station, an access point, a remote terminal, an access terminal, a user terminal, a user agent, and a user device, which are not limited in the embodiments of the present application.

The network device involved in the embodiments of the present application may be a base station, and the base station may include multiple cells providing services for a terminal. Depending on specific application scenarios, the base station may also be referred as to an access point, or may be a device in the access network that communicates with a wireless terminal device through one or more sectors on the air interface, or other names. The network device may be used to mutually exchange received air frames with Internet Protocol (IP) packets, and act as a router between a wireless terminal device and a rest part of the access network, and the rest part of the access network may include an IP communication network. The network device may also coordinate attribute management for an air interface. For example, the network device involved in the embodiments of the present application may be a base transceiver station (BTS) in a global system for mobile communications (GSM) or a code division multiple access (CDMA), may also be a node B in a wide-band code division multiple access (WCDMA), may also be an evolutional node B (eNB or e-Node B) in a long term evolution (LTE) system, a 5G base station (gNB) in 5G network architecture (next generation system), may also be a home evolved Node B (HeNB), a relay node (relay node), a femto, a pico base station (pico), etc., which are not limited in the embodiments of the present application. In some network structures, a network device may include a centralized unit (CU) node and a distributed unit (DU) node, and the centralized unit and the distributed unit may also be geographically separated.

Multi-input multi-output (MIMO) transmission may be performed between the network device and the terminal device using one or more antennas and the MIMO transmission may be single user MIMO (SU-MIMO) or multiple user MIMO (MU-MIMO). According to the form and number of antenna combinations, MIMO transmission may be 2D-MIMO, 3D-MIMO, FD-MIMO, or massive-MIMO, and may also be diversity transmission, precoding transmission, or beamforming transmission, etc.

Those skilled in the art should understand that the embodiments of the present application may be provided as methods, systems, or computer program products. Therefore, the present application may take the form of a fully hardware implementation, a fully software implementation, or a combination of software and hardware implementation. Moreover, the present application may take the form of a computer program product implemented on one or more computer usable storage medium (including but not limited to disk storage and optical storage) containing computer usable program code.

The present application is described with reference to flow charts and/or block diagrams of methods, apparatus (systems), and computer program products according to embodiments of the present application. It should be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor-readable memory capable of directing a computer or other programmable data processing apparatus to operate in a particular manner, and the instructions stored in the processor-readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It is apparent to those skilled in the art that various modifications and variations may be made in the present application without departing from the scope of the present application. As such, provided that these modifications and variations of the present application fall within the scope of the claims of the present application and their equivalents, the present application is also intended to cover such modifications and variations.

**Claims**

1.   A resource allocation method for sidelink positioning, performed by a first terminal, comprising:
determining a physical sidelink control channel (PSCCH) resource and/or a sidelink positioning reference signal (SL PRS) resource to be used based on a mapping relationship between a resource carrying the PSCCH and the SL PRS resource.

2.   The resource allocation method for sidelink positioning of claim 1, wherein the mapping relationship between the resource carrying the PSCCH and the SL PRS resource comprises one or more of:

a mapping relationship between a numbering of the resource carrying the PSCCH and an SL PRS resource numbering or an SL PRS resource set numbering;
a mapping relationship between the resource carrying the PSCCH and a time-domain position of the SL PRS resource;
a mapping relationship between the resource carrying the PSCCH and a frequency-domain position of the SL PRS resource;
a mapping relationship between the resource carrying the PSCCH and a time-domain position and a frequency-domain position of the SL PRS resource;
a mapping relationship between the resource carrying the PSCCH and a comb size of the SL PRS resource;
a mapping relationship between the resource carrying the PSCCH and a resource unit offset of the SL PRS resource; or
a mapping relationship between the resource carrying the PSCCH and a comb size and a resource unit offset of the SL PRS resource.

3.   The resource allocation method for sidelink positioning of claim 2, wherein the mapping relationship between the numbering of the resource carrying the PSCCH and the SL PRS resource numbering or the SL PRS resource set numbering comprises:

a mapping relationship between each numbering of the resource carrying the PSCCH and at least one SL PRS resource numbering or at least one SL PRS resource set numbering; or
a mapping relationship between each SL PRS resource numbering or each SL PRS resource set numbering and at least one numbering of the resource carrying the PSCCH.

4.   The resource allocation method for sidelink positioning of claim 3, wherein the mapping relationship between the numbering of the resource carrying the PSCCH and the SL PRS resource numbering or the SL PRS resource set numbering satisfies following mapping formula:

$$j = i \bmod N, i = 0, 1,..., M\text{-}1;$$

or

$$i = j \bmod M, j = 0, 1,..., N\text{-}1;$$

wherein j is the SL PRS resource numbering or the SL PRS resource set numbering; i is the numbering of the resource carrying the PSCCH; N-1 is a maximum value of the SL PRS resource numbering or a maximum value of the SL PRS resource set numbering in a resource pool; and M-1 is a maximum value of the numbering of the resource carrying the PSCCH in the resource pool.

5. The resource allocation method for sidelink positioning of claim 3, wherein the mapping relationship between the numbering of the resource carrying the PSCCH and the SL PRS resource numbering or the SL PRS resource set numbering satisfies following mapping formula:

$$j = i \bmod K\text{-}L, i = 0, 1,..., M\text{-}1;$$

or

$$i = ( j+L ) \bmod M, j = 0, 1,..., P\text{-}1;$$

wherein j is the SL PRS resource numbering or the SL PRS resource set numbering within a target slot; i is the numbering of the resource carrying the PSCCH; K is a total quantity of the SL PRS resources or SL PRS resource sets comprised in a resource pool; M-1 is a maximum value of the numbering of the resource carrying the PSCCH in the resource pool; L is a total quantity of the SL PRS resources or SL PRS resource sets in the resource pool comprised in slots before the target slot; and P-1 is a maximum value of the SL PRS resource numbering or a maximum value of the SL PRS resource set numbering within the target slot.

6. The resource allocation method for sidelink positioning of any of claims 2 to 5, wherein the mapping relationship between the resource carrying the PSCCH and the SL PRS resource is predefined or pre-configured.

7. The resource allocation method for sidelink positioning of claim 1, wherein determining the PSCCH resource and/or the SL PRS resource to be used based on the mapping relationship between the resource carrying the PSCCH and the SL PRS resource comprises:

   receiving sidelink control information (SCI) transmitted from a second terminal; and
   determining the PSCCH resource and/or the SL PRS resource to be used based on the SCI and the mapping relationship between the resource carrying the PSCCH and the SL PRS resource;
   wherein a PSCCH resource used by the first terminal is different from a PSCCH resource used by the second terminal, and an SL PRS resource used by the first terminal is different from an SL PRS resource used by the second terminal.

8. The resource allocation method for sidelink positioning of claim 1, wherein the PSCCH resource and the SL PRS resource determined to be used by the first terminal are in a same slot, or the PSCCH resource and the SL PRS resource determined to be used by the first terminal are in different slots.

9. A first terminal, comprising a memory, a transceiver, and a processor, wherein
   the memory is used for storing a computer program; the transceiver is used for transmitting and receiving data under control of the processor; and the processor is used for reading the computer program in the memory and performing the following operations:
   determining a physical sidelink control channel (PSCCH) resource and/or a sidelink positioning reference signal (SL PRS) resource to be used based on a mapping relationship between a resource carrying the PSCCH and the SL PRS resource.

10. The first terminal of claim 9, wherein the mapping relationship between the resource carrying the PSCCH and the SL PRS resource comprises one or more of:

   a mapping relationship between a numbering of the resource carrying the PSCCH and an SL PRS resource numbering or an SL PRS resource set numbering;
   a mapping relationship between the resource carrying the PSCCH and a time-domain position of the SL PRS resource;
   a mapping relationship between the resource carrying the PSCCH and a frequency-domain position of the SL PRS resource;

a mapping relationship between the resource carrying the PSCCH and a time-domain position and a frequency-domain position of the SL PRS resource;

a mapping relationship between the resource carrying the PSCCH and a comb size of the SL PRS resource;

a mapping relationship between the resource carrying the PSCCH and a resource unit offset of the SL PRS resource; or

a mapping relationship between the resource carrying the PSCCH and a comb size and a resource unit offset of the SL PRS resource.

11. The first terminal of claim 10, wherein the mapping relationship between the numbering of the resource carrying the PSCCH and the SL PRS resource numbering or the SL PRS resource set numbering comprises:

a mapping relationship between each numbering of the resource carrying the PSCCH and at least one SL PRS resource numbering or at least one SL PRS resource set numbering; or

a mapping relationship between each SL PRS resource numbering or each SL PRS resource set numbering and at least one numbering of the resource carrying the PSCCH.

12. The first terminal of claim 11, wherein the mapping relationship between the numbering of the resource carrying the PSCCH and the SL PRS resource numbering or the SL PRS resource set numbering satisfies following mapping formula:

$$j = i \bmod N, \, i = 0, \, 1,..., \, M\text{-}1;$$

or

$$i = j \bmod M, \, j = 0, \, 1,..., \, N\text{-}1;$$

wherein j is the SL PRS resource numbering or the SL PRS resource set numbering; i is the numbering of the resource carrying the PSCCH; N-1 is a maximum value of the SL PRS resource numbering or a maximum value of the SL PRS resource set numbering in a resource pool; and M-1 is a maximum value of the numbering of the resource carrying the PSCCH in the resource pool.

13. The first terminal of claim 11, wherein the mapping relationship between the numbering of the resource carrying the PSCCH and the SL PRS resource numbering or the SL PRS resource set numbering satisfies following mapping formula:

$$j = i \bmod K\text{-}L, \, i = 0, \, 1,..., \, M\text{-}1;$$

or

$$i = ( \, j\text{+}L \, ) \bmod M, \, j = 0, \, 1,..., \, P\text{-}1;$$

wherein j is the SL PRS resource numbering or the SL PRS resource set numbering within a target slot; i is the numbering of the resource carrying the PSCCH; K is a total quantity of the SL PRS resources or SL PRS resource sets comprised in a resource pool; M-1 is a maximum value of the numbering of the resource carrying the PSCCH in the resource pool; L is a total quantity of the SL PRS resources or SL PRS resource sets in the resource pool comprised in slots before the target slot; and P-1 is a maximum value of the SL PRS resource numbering or a maximum value of the SL PRS resource set numbering within the target slot.

14. The first terminal of any of claims 10 to 13, wherein the mapping relationship between the resource carrying the PSCCH and the SL PRS resource is predefined or pre-configured.

15. The first terminal of claim 9, wherein determining the PSCCH resource and/or the SL PRS resource to be used based on the mapping relationship between the resource carrying the PSCCH and the SL PRS resource comprises:

receiving sidelink control information (SCI) transmitted from a second terminal; and
determining the PSCCH resource and/or the SL PRS resource to be used based on the SCI and the mapping relationship between the resource carrying the PSCCH and the SL PRS resource;
wherein a PSCCH resource used by the first terminal is different from a PSCCH resource used by the second terminal, and an SL PRS resource used by the first terminal is different from an SL PRS resource used by the second terminal.

16. The first terminal of claim 9, wherein the PSCCH resource and the SL PRS resource determined to be used by the first terminal are in a same slot, or the PSCCH resource and the SL PRS resource determined to be used by the first terminal are in different slots.

17. A resource allocation apparatus for sidelink positioning, comprising:
a second determining unit, used for determining a physical sidelink control channel (PSCCH) resource and/or a sidelink positioning reference signal (SL PRS) resource to be used based on a mapping relationship between a resource carrying the PSCCH and the SL PRS resource.

18. The resource allocation apparatus for sidelink positioning of claim 17, wherein the mapping relationship between the resource carrying the PSCCH and the SL PRS resource comprises one or more of:

a mapping relationship between a numbering of the resource carrying the PSCCH and an SL PRS resource numbering or an SL PRS resource set numbering;
a mapping relationship between the resource carrying the PSCCH and a time-domain position of the SL PRS resource;
a mapping relationship between the resource carrying the PSCCH and a frequency-domain position of the SL PRS resource;
a mapping relationship between the resource carrying the PSCCH and a time-domain position and a frequency-domain position of the SL PRS resource;
a mapping relationship between the resource carrying the PSCCH and a comb size of the SL PRS resource;
a mapping relationship between the resource carrying the PSCCH and a resource unit offset of the SL PRS resource; or
a mapping relationship between the resource carrying the PSCCH and a comb size and a resource unit offset of the SL PRS resource.

19. The resource allocation apparatus for sidelink positioning of claim 18, wherein the mapping relationship between the numbering of the resource carrying the PSCCH and the SL PRS resource numbering or the SL PRS resource set numbering comprises:

a mapping relationship between each numbering of the resource carrying the PSCCH and at least one SL PRS resource numbering or at least one SL PRS resource set numbering; or
a mapping relationship between each SL PRS resource numbering or each SL PRS resource set numbering and at least one numbering of the resource carrying the PSCCH.

20. The resource allocation apparatus for sidelink positioning of claim 19, wherein the mapping relationship between the numbering of the resource carrying the PSCCH and the SL PRS resource numbering or the SL PRS resource set numbering satisfies following mapping formula:

$$j = i \bmod N, \ i = 0, \ 1,..., \ M\text{-}1;$$

or

$$i = j \bmod M, \ j = 0, \ 1,..., \ N\text{-}1;$$

wherein j is the SL PRS resource numbering or the SL PRS resource set numbering; i is the numbering of the resource carrying the PSCCH; N-1 is a maximum value of the SL PRS resource numbering or a maximum value of the SL PRS resource set numbering in a resource pool; and M-1 is a maximum value of the numbering of the resource carrying the PSCCH in the resource pool.

21. The resource allocation apparatus for sidelink positioning of claim 19, wherein the mapping relationship between the numbering of the resource carrying the PSCCH and the SL PRS resource numbering or the SL PRS resource set numbering satisfies following mapping formula:

$$j = i \bmod K\text{-}L, \; i = 0, \, 1, ..., \, M\text{-}1;$$

or

$$i = ( j+L ) \bmod M, \; j = 0, \, 1, ..., \, P\text{-}1;$$

wherein j is the SL PRS resource numbering or the SL PRS resource set numbering within a target slot; i is the numbering of the resource carrying the PSCCH; K is a total quantity of the SL PRS resources or SL PRS resource sets comprised in a resource pool; M-1 is a maximum value of the numbering of the resource carrying the PSCCH in the resource pool; L is a total quantity of the SL PRS resources or SL PRS resource sets in the resource pool comprised in slots before the target slot; and P-1 is a maximum value of the SL PRS resource numbering or a maximum value of the SL PRS resource set numbering within the target slot.

22. The resource allocation apparatus for sidelink positioning of any of claims 18 to 21, wherein the mapping relationship between the resource carrying the PSCCH and the SL PRS resource is predefined or pre-configured.

23. The resource allocation apparatus for sidelink positioning of claim 17, wherein determining the PSCCH resource and/or the SL PRS resource to be used based on the mapping relationship between the resource carrying the PSCCH and the SL PRS resource comprises:

   receiving sidelink control information (SCI) transmitted from a second terminal; and
   determining the PSCCH resource and/or the SL PRS resource to be used based on the SCI and the mapping relationship between the resource carrying the PSCCH and the SL PRS resource;
   wherein a PSCCH resource used by the first terminal is different from a PSCCH resource used by the second terminal, and an SL PRS resource used by the first terminal is different from an SL PRS resource used by the second terminal.

24. The resource allocation apparatus for sidelink positioning of claim 17, wherein the PSCCH resource and the SL PRS resource determined to be used by the first terminal are in a same slot, or the PSCCH resource and the SL PRS resource determined to be used by the first terminal are in different slots.

25. A computer-readable storage medium storing a computer program, wherein the computer program is used for causing a computer to perform the method of any of claims 1 to 8.

Determine an SCI resource and/or an SL PRS resource to be used based on a mapping relationship between the SCI resource and the SL PRS resource — 100

FIG. 1

An OFDM symbol

A physical resource block

A subcarrier

SL PRS-0

SL PRS-1

SL PRS-2

SL PRS-3

1    2    3    4

FIG. 2

Determine a PSCCH resource and/or an SL PRS resource to be used based on a mapping relationship between a resource carrying the PSCCH and the SL PRS resource ⟋ 300

FIG. 3

First terminal

⟋ 400
Processor

⟋ 420
Memory

Bus interface

⟋ 410
Transceiver

⟋ 430
User interface

FIG. 4

First terminal

500

Processor

520

Memory

Bus interface

510

Transceiver

530

User interface

FIG. 5

600

First determining unit

FIG. 6

700

Second determining unit

FIG. 7

## INTERNATIONAL SEARCH REPORT

| International application No. |
| --- |
| **PCT/CN2024/093325** |

| A. | CLASSIFICATION OF SUBJECT MATTER |
| --- | --- |
| | H04W 72/02(2009.01)i |

According to International Patent Classification (IPC) or to both national classification and IPC

| B. | FIELDS SEARCHED |
| --- | --- |

Minimum documentation searched (classification system followed by classification symbols)

IPC: H04W H04M H04Q H04L

Documentation searched other than minimum documentation to the extent that such documents are included in the fields searched

Electronic data base consulted during the international search (name of data base and, where practicable, search terms used)

CNTXT, ENTXTC, WPABS, WPABSC, 3GPP, CJFD: 直通链路, 侧链, 物理直通链路控制信道, 定位参考信号, 映射, sci, sidelink, physical sidelink control channel , sidelink positioning reference signal, mapping

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | WO 2023046053 A1 (VIVO MOBILE COMMUNICATION CO., LTD.) 30 March 2023 (2023-03-30) <br> description, paragraphs [0031]-[0392] | 1-25 |
| A | CN 115643637 A (VIVO COMMUNICATION TECHNOLOGY CO., LTD.) 24 January 2023 (2023-01-24) <br> entire document | 1-25 |
| A | WO 2023011347 A1 (DATANG GOHIGH INTELLIGENT AND CONNECTED TECHNOLOGY (CHONGQING) CO., LTD.) 09 February 2023 (2023-02-09) <br> entire document | 1-25 |
| A | WO 2023055542 A1 (QUALCOMM INC.) 06 April 2023 (2023-04-06) <br> entire document | 1-25 |

☐ Further documents are listed in the continuation of Box C.    ☑ See patent family annex.

| | |
| --- | --- |
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **12 July 2024** | **24 July 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/093325**

| Patent document cited in search report | | | Publication date (day/month/year) | Patent family member(s) | | | Publication date (day/month/year) |
|---|---|---|---|---|---|---|---|
| WO | 2023046053 | A1 | 30 March 2023 | CN | 115866741 | A | 28 March 2023 |
| CN | 115643637 | A | 24 January 2023 | WO | 2023001094 | A1 | 26 January 2023 |
| | | | | US | 2024155541 | A1 | 09 May 2024 |
| WO | 2023011347 | A1 | 09 February 2023 | CN | 115706627 | A | 17 February 2023 |
| | | | | KR | 20240032066 | A | 08 March 2024 |
| | | | | EP | 4358455 | A1 | 24 April 2024 |
| WO | 2023055542 | A1 | 06 April 2023 | US | 2023096178 | A1 | 30 March 2023 |
| | | | | US | 11937215 | B2 | 19 March 2024 |
| | | | | KR | 20240074770 | A | 28 May 2024 |
| | | | | CN | 117981261 | A | 03 May 2024 |

Form PCT/ISA/210 (patent family annex) (July 2022)

**EP 4 716 327 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310544284X

- CN 202311012460